# EUROPEAN PATENT APPLICATION

(11) **EP 4 614 126 A1**
(43) Date of publication of application: **10.09.2025**
(21) Application number: 23885656.1
(22) Date of filing: 26.10.2023
(51) Int. Cl.: G01L 5/00, F16C 41/00, G01B 13/12

(54) **BEARING DEVICE AND SPINDLE DEVICE**

(30) Priority: 02.11.2022 JP 2022176455
(71) Applicant: NSK LTD., Tokyo 141-8560 (JP)
(72) Inventor: KENMOCHI Kenta, Fujisawa-shi, Kanagawa 251-8501 (JP)
(74) Representative: Grünecker Patent- und Rechtsanwälte PartG mbB
(86) International application number: PCT/JP2023/038795
(87) International publication number: WO 2024/095900

(57) **Abstract**

This bearing device is equipped with a displacement measurement unit that supports a rotary member on a fixed member via a rolling bearing and measures a radial-direction displacement or axial-direction displacement of the rotary member by supplying compressed gas to a gap to be measured between the rotary member and the fixed member around the rolling bearing. The displacement measurement unit comprises: a displacement detection unit having a compressed-gas injection nozzle that injects compressed gas into the gap to be measured; a pressure loss measurement unit that measures pressure loss in the compressed gas supplied to the displacement detection unit; and a throttling member (differential pressure control unit) that is provided in the vicinity of the rotary member and in a space between the pressure loss measurement unit and the displacement detection unit. A supply source of compressed gas is connected to a pipe line that connects a high-pressure side of the pressure loss measurement unit and the throttling member, and a low-pressure side of the pressure loss measurement unit is connected to a pipe line that connects the displacement detection unit and the throttling member.

## Description

### TECHNICAL FIELD

The present invention relates to a bearing device and a spindle device, and more particularly to a bearing device and a spindle device capable of measuring an axial load by detecting a displacement of a rotation shaft supported by a rolling bearing.

### BACKGROUND ART

In a spindle of a machine tool, there is an increasing movement to control a cutting load to increase a speed and accuracy of machining and to extend a life of a bearing, and as one of measures therefor, there is an increasing need for measuring an axial load during operation of the machine tool.

For example, Patent Literature 1 discloses a technique of calculating an axial load by measuring an axial displacement amount with a non-contact sensor and multiplying the axis displacement amount by a rigidity value of the bearing or the like, instead of directly measuring the axial load.

Patent Literature 2 also discloses a technique of measuring and calculating a displacement and an axial load of a shaft of a machine tool using a differential pressure sensor disposed at a position away from the machine tool.

### CITATION LIST

### PATENT LITERATURE

Patent Literature 1: JP2010-217167A
Patent Literature 2: Japanese Patent No. 6662499

### SUMMARY OF INVENTION

### TECHNICAL PROBLEM

However, in the technique described in Patent Literature 1, when a displacement of a rotation shaft is measured using the non-contact sensor, it is necessary to dispose the non-contact sensor in the vicinity of a measurement unit, and to dispose a circuit and wiring attached thereto in the vicinity of the measurement unit. In addition, appropriate measurement may not be made due to the complexity of an internal structure of the machine tool, damage due to the adhesion of cutting chips or cutting water during machining, and the like.

In the technique described in Patent Literature 2, a differential pressure and the axial load may not be accurately calculated depending on an installation position of the differential pressure sensor.

In order to solve the above problem, an object of the present invention is to provide a bearing device and a spindle device capable of more accurately measuring a radial displacement (or an axial displacement) of a rotation member without disposing a measurement unit in the vicinity of the rotation member when the rotation member is supported by a rolling bearing.

### SOLUTION TO PROBLEM

In order to achieve the above object, a bearing device according to an aspect of the present invention supports a rotation member on a fixing member via a rolling bearing, and includes: a displacement measurement unit configured to measure a radial displacement or an axial displacement of the rotation member by supplying a compressed gas to a gap to be measured between the rotation member and the fixing member around the rolling bearing, and the displacement measurement unit includes a displacement detection unit having a compressed gas discharge nozzle configured to discharge the compressed gas to the gap to be measured, a pressure loss measurement unit configured to measure a pressure loss of the compressed gas to be supplied to the displacement detection unit, and a throttle member (differential pressure adjustment unit) provided in the vicinity of the rotation member and between the pressure loss measurement unit and the displacement detection unit. A supply source of the compressed gas is connected to a pipeline that connects a high-pressure side of the pressure loss measurement unit and the throttle member, and a low-pressure side of the pressure loss measurement unit is connected to a pipeline that connects the displacement detection unit and the throttle member.

Preferably, the pressure loss of the compressed gas is a differential pressure between a pressure of the compressed gas between the displacement detection unit and the throttle member and a pressure of a compressed gas to be output from the supply source of the compressed gas.

Preferably, an installation position of the throttle member (relative position to the displacement detection unit) is fixed, and an installation position of the pressure loss measurement unit (relative position to the displacement detection unit) is movable.

Preferably, a flow velocity of the compressed gas is zero from a location at which the supply source of the compressed gas is connected to the pipeline that connects the high-pressure side of the pressure loss measurement unit and the throttle member to the high-pressure side of the pressure loss measurement unit. Preferably, a flow velocity of the compressed gas is zero from a location at which the low-pressure side of the pressure loss measurement unit is connected to the pipeline that connects the displacement detection unit and the throttle member to the low-pressure side of the pressure loss measurement unit.

The displacement detection unit may further include a gas recovery groove configured to recover the compressed gas discharged from the compressed gas discharge nozzle to the gap to be measured, on one side or both sides in an axial direction of the compressed gas discharge nozzle.

The displacement detection unit may further include a compressed gas discharge unit configured to discharge the compressed gas recovered by the gas recovery groove to the outside.

The bearing device further includes: an arithmetic processing device configured to calculate a load amount to be applied to the rotation member based on the differential pressure detected by the pressure loss measurement unit.

According to another aspect of the present invention, there is provided a spindle device of a machine tool including: the bearing device, the spindle device rotatably supporting a spindle as the rotation member by the bearing device and measuring a load applied to the spindle.

### ADVANTAGEOUS EFFECTS OF INVENTION

According to the bearing device and the spindle device of the present invention, when the rotation member is supported by the rolling bearing, the radial displacement or the axial displacement of the rotation member can be measured using the compressed gas, and the radial displacement or the axial displacement of the rotation member can be accurately measured regardless of the installation position of the differential pressure sensor.

### BRIEF DESCRIPTION OF DRAWINGS

[FIG. 1] FIG. 1 is a cross-sectional view illustrating a first embodiment of a bearing device of a machine tool according to the present invention.
[FIG. 2] (a) of FIG. 2 is an enlarged cross-sectional view in an axial direction of the bearing device in FIG. 1, and (b) of FIG. 2 is an enlarged cross-sectional view in an axis-perpendicular direction of the bearing device in FIG. 1.
[FIG. 3] FIG. 3 is a diagram illustrating a positional relation among a rotation shaft, a throttle, and a differential pressure sensor in the first embodiment.
[FIG. 4] FIG. 4 is a diagram illustrating a case in which a distance between the rotation shaft and the differential pressure sensor is large in the first embodiment.
[FIG. 5] FIG. 5 is a diagram illustrating a positional relation among a rotation shaft, a throttle, and a differential pressure sensor in a comparative example.
[FIG. 6] FIG. 6 is a diagram illustrating a case in which a distance between the rotation shaft and the differential pressure sensor is large in the comparative example.
[FIG. 7] FIG. 7 is a graph illustrating a relation between a differential pressure and a supply air pressure obtained in an experiment using the configuration of the first embodiment.
[FIG. 8] FIG. 8 is a graph illustrating a relation between a differential pressure and a supply air pressure obtained in an experiment using the configuration of the comparative example.
[FIG. 9] FIG. 9 is a schematic diagram illustrating a case in which a spindle is supported by the bearing device in FIG. 1.
[FIG. 10] FIG. 10 is a diagram illustrating a bearing device according to a second embodiment of the present invention, in which (a) is an enlarged cross-sectional view in an axial direction, and (b) is an enlarged cross-sectional view in an axis-perpendicular direction.
[FIG. 11] FIG. 11 is an enlarged cross-sectional view in an axial direction illustrating a bearing device according to a third embodiment of the present invention.
[FIG. 12] FIG. 12 is a cross-sectional view illustrating a rotation table of a machine tool to which the bearing device according to the present invention is applied.
[FIG. 13] FIG. 13 is a cross-sectional view illustrating a bearing device according to a fourth embodiment of the present invention.
[FIG. 14] (a) of FIG. 14 is an enlarged cross-sectional view in an axial direction of the bearing device in FIG. 13, and (b) of FIG. 14 is an enlarged cross-sectional view in an axis-perpendicular direction of the bearing device in FIG. 13.
[FIG. 15] FIG. 15 is a diagram illustrating a modification of the fourth embodiment, in which (a) is an enlarged cross-sectional view illustrating a case in which a compressed gas discharge nozzle is in an upward state, (b) is an enlarged cross-sectional view illustrating a case in which the compressed gas discharge nozzle is in a downward state, and (c) is an enlarged cross-sectional view illustrating a case in which the compressed gas discharge nozzle is in a right turning state on a radial line.
[FIG. 16] FIG. 16 is a cross-sectional view illustrating a bearing device according to a fifth embodiment of the present invention, in which (a) is an enlarged cross-sectional view in an axial direction, and (b) is an enlarged cross-sectional view in an axis-perpendicular direction.
[FIG. 17] FIG. 17 is an enlarged cross-sectional view illustrating a bearing device according to a sixth embodiment of the present invention.

### DESCRIPTION OF EMBODIMENTS

Embodiments of the present invention will be described with reference to the drawings. In the drawings, the same or similar parts are denoted by the same or similar reference numerals. However, the drawings are schematic, and a relation between a thickness and a planar dimension, a thickness ratio of each layer, and the like may be different from actual ones. Therefore, specific thicknesses or dimensions should be determined in consideration of the following description. The drawings also include portions having different dimensional relations or ratios.

The embodiments to be described later exemplify devices or methods for embodying the technical idea of the present invention, and do not limit materials, shapes, structures, arrangements, and the like of the components of the device of the present invention to those to be described later. Various modifications, changes, and substitutions can be made to the technical idea of the present invention within the technical scope defined by the claims.

### First Embodiment

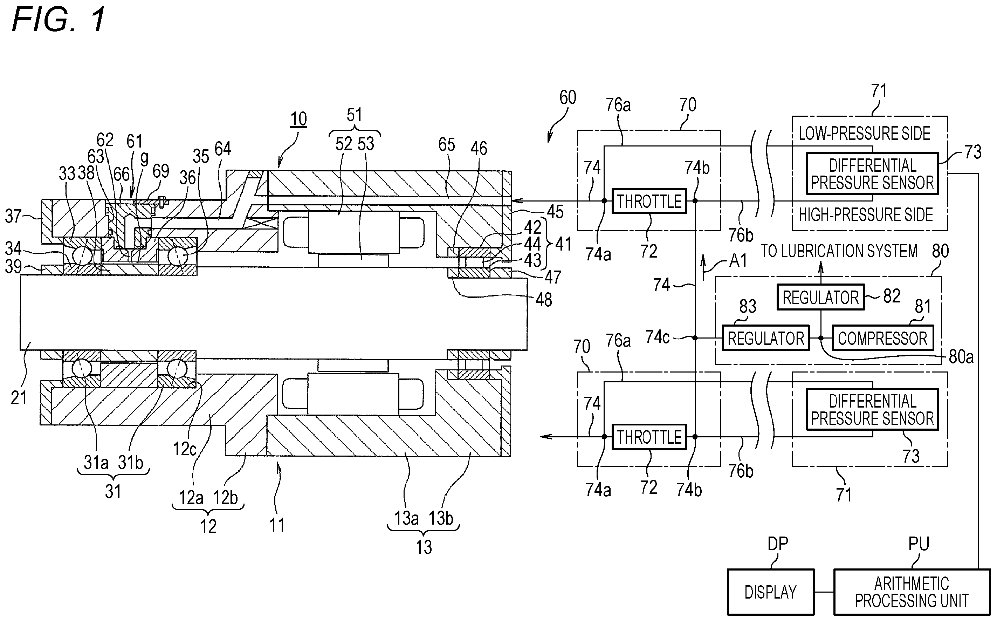

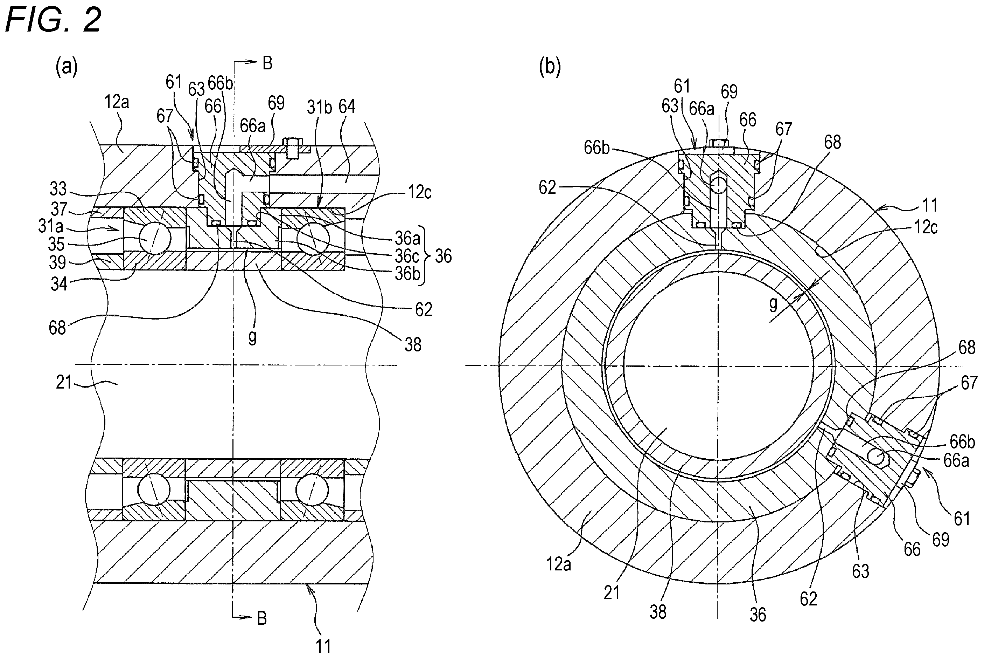

A bearing device (spindle device) for a machine tool according to a first embodiment of the present invention will be described with reference to FIG. 1, (a) and (b) of FIG. 2.

A bearing device (spindle device) 10 of the machine tool is of a motor built-in type, and a hollow rotation shaft (for example, a spindle) 21 as a rotation member is rotatably supported by a front rolling bearing 31 and a rear rolling bearing 41 in a housing 11 as a fixing member (stationary member). The rotation shaft 21 is rotationally driven by a drive motor 51 disposed between the front rolling bearing 31 and the rear rolling bearing 41.

The housing 11 includes a front cylindrical portion 12 and a rear cylindrical portion 13 which are divided into two parts between the front rolling bearing 31 and the drive motor 51.

The front cylindrical portion 12 includes a front small outer diameter portion 12a having a small outer diameter and a rear large outer diameter portion 12b having an outer diameter larger than that of the small outer diameter portion 12a. Inner peripheral surfaces of the small outer diameter portion 12a and the large outer diameter portion 12b are formed to have the same inner diameter, and a bearing accommodating step portion 12c for accommodating the front rolling bearing 31 is formed from a front end side to a rear end side of the small outer diameter portion 12a.

Conversely, the rear cylindrical portion 13 includes a large inner diameter portion 13a having a large inner diameter and a small inner diameter portion 13b having an inner diameter smaller than that of the large inner diameter portion 13a.

The front rolling bearing 31 includes a pair of angular ball bearings 31a and 31b having substantially the same dimensions and arranged so as to form a back-to-back combination. Each of the angular ball bearings 31a and 31b includes an outer ring 33 as a stationary side raceway ring, an inner ring 34 as a rotating side raceway ring, and a plurality of balls 35 as rolling elements arranged with a contact angle between an outer ring raceway groove as a stationary side raceway and an inner ring raceway groove as a rotating side raceway. That is, each of the bearings 31a and 31b includes the inner ring 34, the outer ring 33, and the balls (rolling elements) 35 rotatably arranged between the inner ring 34 and the outer ring 33. Each of the bearings 31a and 31b may include a cage that holds the rolling element.

In each of the angular ball bearings 31a and 31b, the outer ring 33 is fitted into the bearing accommodating step portion 12c formed in the front cylindrical portion 12 of the housing 11 via an outer ring side spacer 36, and is fixed by a front bearing outer ring retainer 37 bolted to the front cylindrical portion 12 of the housing 11.

The inner ring 34 of each of the angular ball bearings 31a and 31b is fitted onto the rotation shaft 21 via an inner ring side spacer 38, and is fixed to the rotation shaft 21 by a nut 39 fastened to the rotation shaft 21. A constant position pre-pressure is applied to the angular ball bearings 31a and 31b by the nut 39. Therefore, an axial position of the rotation shaft 21 is determined by the front rolling bearing 31.

The rear rolling bearing 41 is a cylindrical roller bearing, and includes an outer ring 42, an inner ring 43, and a plurality of cylindrical rollers 44 as rolling elements. The outer ring 42 of the rear rolling bearing 41 is fitted into the small inner diameter portion 13b of the rear cylindrical portion 13 of the housing 11, and is fixed to the small inner diameter portion 13b via an outer ring side spacer 46 by a rear bearing retainer 45 bolted to the small inner diameter portion 13b. The inner ring 43 of the rear rolling bearing 41 is fixed to the rotation shaft 21 via an inner ring side spacer 48 by a nut 47 fastened to the rotation shaft 21.

The drive motor 51 includes a stator 52 fitted into the large inner diameter portion 13a of the rear cylindrical portion 13 of the housing 11, and a rotor 53 fitted onto the rotation shaft 21 facing an inner peripheral side of the stator 52 via a gap therebetween.

The bearing device 10 of the machine tool having the above configuration is provided with a displacement measurement unit (load measurement unit) 60 that measures a load amount applied to the rotation shaft 21. The displacement measurement unit 60 includes, as one set, a displacement detection unit 61 that detects a radial displacement of the rotation shaft 21 using the compressed gas, a pressure loss measurement unit 71 that measures a pressure loss of the compressed gas corresponding to a gap between the outer ring side spacer 36 and the inner ring side spacer 38, and a differential pressure adjustment unit 70 that is connected to a compressed gas supply unit 80 and is provided between the displacement detection unit 61 and the pressure loss measurement unit 71. In the present embodiment, a plurality of sets (two sets in FIG. 1) of the displacement detection unit 61, the differential pressure adjustment unit 70, and the pressure loss measurement unit 71 are provided in a circumferential direction. The displacement measurement unit 60 includes an arithmetic processing unit PU that calculates the load amount applied to the rotation shaft 21 based on a measurement result of each pressure loss measurement unit 71. The displacement measurement unit 60 can be disposed at any position in the axial direction of the rotation shaft 21. More preferably, the displacement measurement unit 60 is desirably disposed in the rear vicinity of a most front row bearing, in which an axial displacement amount relative to the load is large and an influence of extending a shaft length due to the installation of the displacement measurement unit is small. The compressed gas is supplied from one compressed gas supply unit 80 to each set of the differential pressure adjustment unit 70 and the pressure loss measurement unit 71. In addition, the compressed gas is supplied to the displacement detection unit 61 via the differential pressure adjustment unit 70. The compressed gas supply unit 80 is a supply source of the compressed gas.

As illustrated in (a) of FIG. 2 and (b) of FIG. 2, the displacement detection units 61 are formed at at least two locations that maintain an interval of, for example, 120° in the circumferential direction so as not to face each other via a central axis in the small outer diameter portion 12a of the front cylindrical portion 12 of the housing 11. (b) of FIG. 2 is a cross-sectional view taken along line B-B in (a) of FIG. 2.

Each of the displacement detection units 61 includes the outer ring side spacer 36 and the inner ring side spacer 38 of the front rolling bearing 31. That is, the outer ring side spacer 36 includes an outer peripheral side ring portion 36a that comes into contact with an axial end surface of each of the outer rings 33 of the angular ball bearings 31a and 31b that face each other, and an inner peripheral side ring portion 36b that is narrower than the outer peripheral side ring portion 36a.

A recess 36c recessed from the outside to the inside is formed in a central portion of the outer peripheral side ring portion 36a in the axial direction. An inner peripheral surface of the inner peripheral side ring portion 36b faces an outer peripheral surface of the inner ring side spacer 38 so as to form a predetermined gap to be measured g.

A funnel-shaped compressed gas discharge nozzle 62 is formed extending in a radial direction from a bottom to an inner peripheral surface of the recess 36c of the outer peripheral side ring portion 36a, and the compressed gas is discharged from the compressed gas discharge nozzle 62 to the gap to be measured g between the outer ring side spacer 36 and the inner ring side spacer 38.

In many cases, the rotation shaft (for example, a spindle) of the machine tool is a hollow shaft in order to provide a draw bar in an inner diameter portion of the shaft as a mechanism for gripping a tool, and is assumed to be rotated at a high speed in order to improve machining efficiency. Therefore, in particular, during high-speed rotation use, the rotation members such as the rotation shaft 21 and the inner ring side spacer 38 expand by about several µm to several tens of µm due to a centrifugal force. Further, during the rotation of the spindle, a temperature difference occurs between the housing 11 and the rotation shaft 21, and in many cases, the rotation shaft 21 has a higher temperature than the housing 11, and thus a gap amount between the housing 11 and the rotation shaft 21 decreases by about several µm to several tens of µm.

In the spindle of the machine tool, the gap formed between the housing 11 and the rotation shaft 21, such as between the outer ring side spacer 36 and the inner ring side spacer 38, is set to about several tenths of a mm at most in order to prevent foreign matters from entering the inside of the spindle and the rolling bearing 31.

Therefore, the gap to be measured g between the outer ring side spacer 36 and the inner ring side spacer 38 is set to 0.05 mm to 0.5 mm when the rotation shaft 21 is stationary, and a change amount in the pressure loss with respect to the radial displacement of the rotation shaft 21 increases as the gap amount decreases, and thus the gap to be measured g is preferably set to 0.05 mm to 0.2 mm.

In order to accurately measure the gap to be measured g between the outer ring side spacer 36 and the inner ring side spacer 38 during operation, it is desirable that the inner ring side spacer 38 provided in the displacement detection unit 61 is coaxial with the rotation shaft 21 as much as possible. Therefore, it is desirable that the inner ring side spacer 38 is fitted to the shaft by an intermediate fit or an interference fit.

The small outer diameter portion 12a of the housing 11 is formed with a circular opening portion 63 whose inner diameter is reduced in two steps from an outer peripheral surface to the recess 36c of the outer ring side spacer 36 and that is coaxial with the compressed gas discharge nozzle 62. As illustrated in FIG. 1, one end of the compressed gas supply passage 64 formed in the front cylindrical portion 12 is opened into the opening portion 63 on a rear side wall. As illustrated in FIG. 1, the other end of the compressed gas supply passage 64 communicates with a compressed gas supply passage 65 that is opened at a rear end formed in the rear cylindrical portion 13 and extends forward in the axial direction.

As illustrated in (a) of FIG. 2 and (b) of FIG. 2, a gas connection portion 66 as a gas direction changing portion that changes a direction of the compressed gas to be supplied from the compressed gas supply passage 64 from the axial direction to the radial direction and supplies the compressed gas to the compressed gas discharge nozzle 62 is mounted in the opening portion 63. The gas connection portion 66 has a shape capable of being fitted into the opening portion 63, for example, an outer peripheral shape having the same shape as an inner peripheral shape of the opening portion 63, and is formed therein with a gas passage 66a communicating with the opening portion 63 and a gas passage 66b having one end communicating with the gas passage 66a and the other end communicating with the compressed gas discharge nozzle 62. O-rings 67 and 67 are disposed between a side wall of the gas connection portion 66 and an inner wall of the opening portion 63, O-rings 68 are also disposed between a bottom surface of the gas connection portion 66 and a bottom surface of the recess 36c, and the O-rings 67, 67, and 68 prevent the leakage of the compressed air.

As illustrated in (a) of FIG. 2 and (b) of FIG. 2, the gas connection portion 66 is positioned in the radial direction such that a step portion of an outer peripheral surface thereof is in contact with a step portion of an inner peripheral surface of the opening portion 63. In addition, an end surface of the gas connection portion 66 on an outer side in the radial direction is in contact with a pressing piece 69 screwed to the outer peripheral surface of the small outer diameter portion 12a, thereby preventing the gas connection portion 66 from coming out of the opening portion 63. In addition, the gas connection portion 66 is not limited to the case of being prevented from coming out by the pressing piece 69, a flange portion can be formed on an outer peripheral surface side of the gas connection portion 66 and the flange portion can be screwed, and a fixing method (fixing structure) of the gas connection portion 66 to the housing 11 is not limited to a fixing method using the pressing piece 69.

The displacement detection units 61 are not limited to being arranged at two locations in the circumferential direction of the housing 11, and may be provided at three or more locations in the circumferential direction so as not to face one another across the central axis. In addition, the displacement detection unit 61 discharges the compressed gas from the compressed gas discharge nozzle 62 to the gap between the outer ring side spacer 36 and the inner ring side spacer 38, and thus the displacement detection units 61 are preferably arranged at three or more locations at equal angular intervals in order to cancel a load on the rotation shaft 21 generated due to the compressed gas.

As illustrated in FIG. 1, a compressed gas is supplied from the compressed gas supply unit 80 to a lubrication system (not illustrated) for oil air lubrication or oil mist lubrication that supplies lubricating oil to the front rolling bearing 31 and the rear rolling bearing 41. The compressed gas supply unit 80 includes a compressor 81 that discharges the compressed gas, a regulator 82 for the lubrication system that regulates the compressed gas to be discharged from the compressor 81, and a regulator 83 for pressure loss measurement connected in parallel with the regulator 82. Reference numeral 80a denotes a connection point at which a pipe connecting the compressor 81 and the regulator 83 is connected to a pipe from the regulator 82. The supply of the lubricating oil to the front rolling bearing 31 and the rear rolling bearing 41 is not limited to the oil air lubrication or the oil mist lubrication. For example, grease lubrication may be used. The lubricating oil and the grease lubrication are examples of lubricants. The lubrication system is a lubricant supply unit that supplies a lubricant to the bearing 31 and the bearing 41.

The differential pressure adjustment unit 70 is connected to the compressed gas supply passage 65 of the housing 11 by a compressed gas supply path (pipe) 74. The differential pressure adjustment unit 70 includes a throttle (throttle member) 72 interposed in the compressed gas supply path 74, a first branch pipeline 76a branched from a first branch point 74a of the supply path 74, and a second branch pipeline 76b branched from a second branch point 74b of the supply path 74.

The first branch pipeline 76a extending from the first branch point 74a is connected to a low-pressure side of the differential pressure sensor 73, and the second branch pipeline 76b extending from the second branch point 74b is connected to a high-pressure side of the differential pressure sensor 73. The first branch point 74a is a branch point on a downstream side of the throttle 72, and the second branch point 74b is a branch point on an upstream side of the throttle 72.

The pressure loss measurement unit 71 is connected to the differential pressure adjustment unit 70 by the first branch pipeline 76a and the second branch pipeline 76b. The differential pressure sensor 73 provided in the pressure loss measurement unit 71 detects a difference (differential pressure) between a pressure on the upstream side and a pressure on the downstream side of the throttle 72. That is, the differential pressure sensor 73 detects, as a pressure loss of the compressed gas, a differential pressure between a pressure of the compressed gas between the displacement detection unit 61 and the throttle 72 and a pressure of the compressed gas output from the compressed gas supply unit 80.

The compressed gas supply path 74 extends downward from the second branch point 74b and is connected to the compressed gas supply unit 80 through a path merging point 74c. Therefore, an original pressure of the compressed gas supply unit 80 is input to the upstream side of the throttle 72.

In such a compressed gas path (pipe and branch), no flow velocity of the compressed gas occurs between the first branch point 74a and the low-pressure side of the differential pressure sensor 73 (that is, in the first branch pipeline 76a). In addition, no flow velocity of the compressed gas occurs between the second branch point 74b and the high-pressure side of the differential pressure sensor 73 (that is, in the second branch pipeline 76b).

As illustrated in FIG. 1, the throttle 72 is interposed in the pipe 74 that couples the regulator 83 and the opening of the compressed gas supply passage 65 formed in the housing 11. A throttle amount of the throttle 72 is set so that a differential pressure detection value detected by the differential pressure sensor 73 becomes a preset value when the radial displacement of the rotation shaft 21 is "0" during the rotation of the rotation shaft 21. Accordingly, the pressure on the downstream side of the throttle 72 represents a pressure loss corresponding to only the radial displacement of the rotation shaft 21 in consideration of a flow path resistance due to a pipe length and a pipe diameter from the throttle 72 to the displacement detection unit 61.

The low-pressure side of the differential pressure sensor 73 is connected to the pipe 74 on the downstream side of the throttle 72 by the first branch pipeline 76a (connected to the first branch point 74a), and the high-pressure side of the differential pressure sensor 73 is connected to the pipe 74 on the upstream side of the throttle 72 by the second branch pipeline 76b. In addition, the second branch point 74b, which is a merging point of the second branch pipeline 76b and the pipe (compressed gas supply path) 74, is connected to the regulator 83 by the pipe 74. The differential pressure sensor 73 detects a differential pressure between a compressed air pressure (pressure at the second branch point 74b) to be supplied from the regulator 83 and the pressure on the downstream side (pressure at the first branch point 74a) of the throttle 72 connected to the displacement detection unit 61, that is, the pressure loss corresponding to the displacement of the rotation shaft 21 in the displacement detection unit 61, and outputs the detected differential pressure detection value as an analog value or a digital value.

The arithmetic processing unit PU is implemented by an arithmetic processing device such as a microcomputer, receives the differential pressure detection value output from the differential pressure sensor 73 of each pressure loss measurement unit 71, and calculates a converted displacement amount of the rotation shaft 21 in the radial direction based on the differential pressure detection value. In addition, the arithmetic processing unit PU calculates the load amount applied to the rotation shaft 21 by multiplying the calculated converted displacement amount of the rotation shaft 21 in the radial direction by a shaft rigidity value at an axial position of the compressed gas discharge nozzle 62 calculated in advance, and outputs the calculation result to a display DP for display. The shaft rigidity value is calculated based on a load point, a bearing position and a bearing rigidity of the front rolling bearing 31, a shaft rigidity, the axial position of the compressed gas discharge nozzle 62 of the displacement detection unit 61, and the like.

The load amount applied to the rotation shaft 21 may not be calculated by the above calculation. For example, by repeatedly applying a known load to the rotation shaft 21 and measuring the differential pressure detection value output from the differential pressure sensor 73 of the pressure loss measurement unit 71 at that time, a load calculation map representing a relation between the load and the differential pressure detection value is created and stored in a storage unit of the arithmetic processing unit PU. In this case, the load amount can be directly calculated (acquired) based on the differential pressure detection value with reference to the load calculation map based on the differential pressure detection value detected by the differential pressure sensor 73 during cutting. In this way, the load amount can be easily calculated without a need to convert the differential pressure detection value of the differential pressure sensor 73 into the displacement amount. At this time, an equation of a characteristic line of the load calculation map can be obtained instead of using the load calculation map, and the load amount can also be calculated by substituting the differential pressure detection value of the differential pressure sensor 73 into the obtained equation.

The two or more sets of the displacement detection unit 61, the differential pressure adjustment unit 70, and the pressure loss measurement unit 71 are provided as described above, and thus the combination of the differential pressure adjustment unit 70 and the pressure loss measurement unit 71 is connected in parallel to the regulator 83 as illustrated in FIG. 1.

Next, an operation of the bearing device 10 of the first embodiment will be described.

First, the compressed gas is supplied from the compressed gas supply unit 80 to the differential pressure adjustment unit 70 and the pressure loss measurement unit 71, and in a state in which the rotation shaft 21 of the bearing device 10 of the machine tool is rotated and the radial displacement of the rotation shaft 21 is "0", the throttle amount of the throttle 72 of the differential pressure adjustment unit 70 is adjusted such that the differential pressure detection value detected by the differential pressure sensor 73 becomes the preset value.

Then, by starting the compressor 81 in a state in which the rotation shaft 21 of the bearing device 10 is stopped, the compressed gas is regulated by the regulator 82, and the compressed gas at a set pressure is supplied to a lubricating oil supply system (not illustrated) for the front rolling bearing 31 and the rear rolling bearing 41 to start the supply of the lubricant to the front rolling bearing 31 and the rear rolling bearing 41.

At the same time or before or after the supply, the compressed gas to be discharged from the compressor 81 is regulated by the regulator 83 and supplied to the differential pressure adjustment unit 70 and the pressure loss measurement unit 71.

The compressed gas supplied to the differential pressure adjustment unit 70 is input (introduced) to the compressed gas supply passage 65 of the housing 11 via the throttle 72. The compressed gas input to the compressed gas supply passage 65 is redirected 90 degrees from the axial direction to the radial direction at the gas connection portion 66 from the compressed gas supply passage 64 and is supplied to the compressed gas discharge nozzle 62.

The compressed gas supplied to the compressed gas discharge nozzle 62 is supplied to the gap to be measured g between the outer ring side spacer 36 and the inner ring side spacer 38. As the gap to be measured g, that is, the radial displacement of the rotation shaft 21 becomes larger from the state of "0", the gap to be measured g becomes smaller, and the pressure loss decreases accordingly. Conversely, as the radial displacement decreases, the gap to be measured g becomes larger, and the pressure loss increases accordingly. As described above, when the hollow rotation shaft 21 rotates at a high speed, the rotation members such as the rotation shaft 21 and the inner ring side spacer 38 become larger due to the centrifugal force, and the gap to be measured g becomes smaller when a temperature of the rotation shaft 21 becomes high relative to the housing 11.

Therefore, in a no-load state in which the radial displacement of the rotation shaft 21 is "0", the differential pressure detection value detected by the differential pressure sensor 73 becomes the preset value, and the differential pressure detection value indicating that the radial displacement of the rotation shaft 21 is "0" is output to the arithmetic processing unit PU.

Therefore, the arithmetic processing unit PU converts the differential pressure detection value input from the differential pressure sensor 73 into the radial displacement of the rotation shaft 21, and multiplies the converted radial displacement by a preset shaft rigidity value to calculate the load amount applied to the rotation shaft 21. The calculated load amount is output to and displayed on the display DP. In this case, the radial displacement is "0", and thus the load amount displayed on the display DP is "0".

For example, when cutting is started from this state, a cutting load is applied to the rotation shaft 21, and a radial displacement corresponding to the cutting load occurs in the rotation shaft 21. The radial displacement depends on a direction of the cutting load applied to the rotation shaft 21.

Therefore, a pressure loss corresponding to the radial displacement of the rotation shaft 21 occurs in the compressed gas to be discharged from the compressed gas discharge nozzles 62 of the plurality of displacement detection units 61 according to the radial displacement of the rotation shaft 21. This pressure loss is detected as the differential pressure detection value by the differential pressure sensor 73 of the pressure loss measurement unit 71.

When the detected differential pressure detection value is supplied to the arithmetic processing unit PU, the arithmetic processing unit PU converts the differential pressure detection value into the radial displacement of the rotation shaft 21, and multiplies the converted radial displacement by the preset shaft rigidity value to calculate the load amount applied to the rotation shaft 21. The calculated load amount is output to and displayed on the display DP.

In this way, according to the bearing device 10 of the first embodiment, by supplying the compressed gas to the displacement detection unit 61 that includes the outer ring side spacer 36 and the inner ring side spacer 38 of the front rolling bearing 31, the compressed gas is discharged from the compressed gas discharge nozzle 62 to the gap to be measured g between the outer ring side spacer 36 and the inner ring side spacer 38. Therefore, the pressure loss of the compressed gas corresponding to the gap to be measured g, that is, the radial displacement of the rotation shaft 21 is generated. The pressure loss is detected by the differential pressure sensor 73 of the pressure loss measurement unit 71 provided outside the housing 11, and the detected differential pressure detection value is supplied to the arithmetic processing unit PU, whereby the load amount applied to the rotation shaft 21 can be calculated.

Therefore, in the displacement detection unit 61, the pressure loss corresponding to the radial displacement of the rotation shaft 21 can be generated with a simple configuration in which only the outer ring side spacer 36 and the inner ring side spacer 38 that face each other via the predetermined gap to be measured g, the compressed gas supply passage 64, the gas connection portion 66, and the compressed gas discharge nozzle 62 are provided. Therefore, the displacement detection unit 61 does not require a component that operates electrically, and thus there is no need to consider routing of wiring or electrical insulation.

In addition, the differential pressure adjustment unit 70 supplies the compressed gas to the displacement detection unit 61 via the throttle 72, and the pressure loss measurement unit 71 detects a differential pressure between the pressure on the downstream side of the throttle 72, that is, on a displacement detection unit 61 side and an original pressure of the compressed gas to be supplied to the pressure loss measurement unit 71 (differential pressure adjustment unit 70), so that the pressure loss in the displacement detection unit 61 can be measured. Then, the load amount applied to the rotation shaft 21 can be calculated after converting the detected differential pressure detection value into the radial displacement of the rotation shaft 21, or the load amount applied directly to the rotation shaft 21 can be calculated based on the differential pressure.

Therefore, when the rotation shaft 21 is rotatably supported by the rolling bearing, it is possible to calculate the radial displacement of the rotation shaft 21 using the compressed gas or the load amount applied to the rotation shaft 21 with a simple configuration.

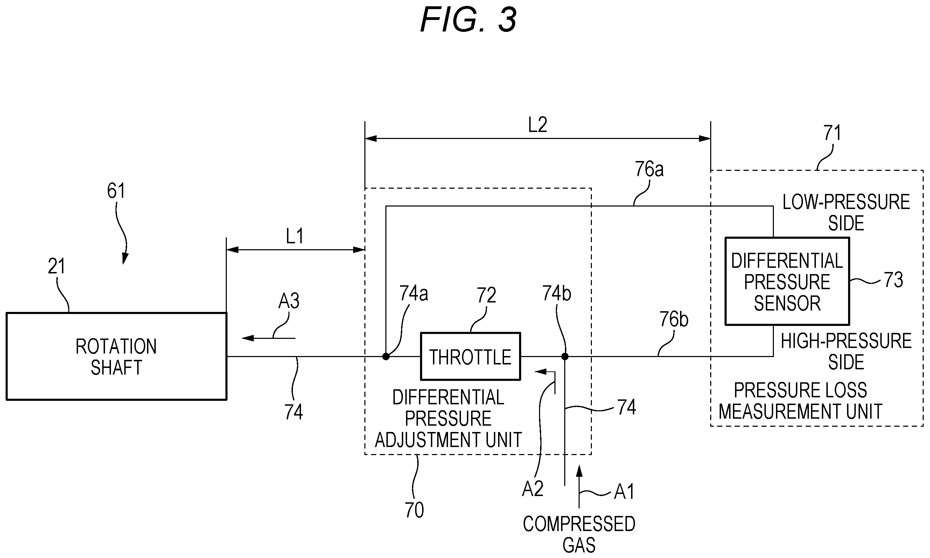

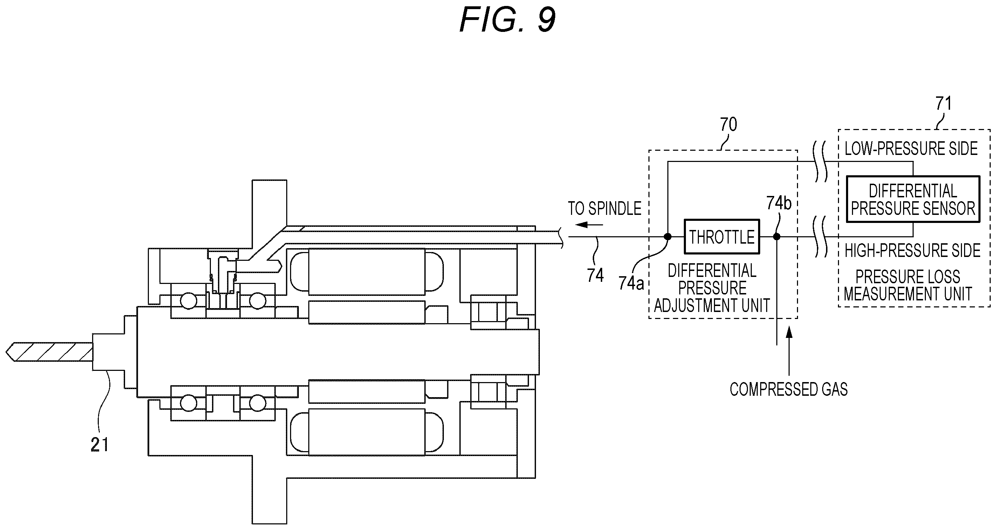

FIG. 3 is a diagram illustrating a simplified configuration of FIG. 1. FIG. 3 illustrates only one set of the displacement detection unit 61, the differential pressure adjustment unit 70, and the pressure loss measurement unit 71. The compressed gas supply unit 80 is also omitted. In the present embodiment, in order to reduce an influence of a distance from the rotation shaft 21 to the pressure loss measurement unit 71 (influence in the differential pressure measurement), the differential pressure adjustment unit 70 (throttle 72) and the pressure loss measurement unit 71 (differential pressure sensor 73) are separated, the differential pressure adjustment unit 70 is disposed between the rotation shaft 21 and the pressure loss measurement unit 71, the differential pressure adjustment unit 70 is provided within a predetermined distance from the rotation shaft 21, and the compressed gas is supplied to the differential pressure adjustment unit 70. The differential pressure adjustment unit 70 and the pressure loss measurement unit 71 are connected by the branch pipelines 76a and 76b. FIG. 9 illustrates a case in which the rotation shaft 21 in FIG. 3 is a spindle. In the configuration (spindle device) of FIG. 9, a spindle that is a rotation shaft member (spindle) is supported by a bearing, and a load applied to the spindle can be measured.

As illustrated in FIG. 3, the differential pressure adjustment unit 70 is provided at a position away from the rotation shaft 21 by a distance L1. The distance L1 is a distance that can ensure a measurement accuracy required for the differential pressure sensor 73. In addition, the pressure loss measurement unit 71 is provided at a position away from the differential pressure adjustment unit 70 by a distance L2 The compressed gas to be supplied from the compressed gas supply unit 80 (FIG. 1) flows through the pipe 74 toward the second branch point 74b as indicated by an arrow A1, flows leftward from the second branch point 74b (arrow A2), then passes through the throttle 72 and the first branch point 74a, and is supplied to the rotation shaft 21 (displacement detection unit 61) as indicated by an arrow A3. Then, the compressed gas is supplied to the gap to be measured g (FIG. 1), and a pressure change occurs (pressure decreases) in the gap to be measured g regardless of whether the rotation shaft 21 is rotating. The reduced pressure value is input to the low-pressure side of the differential pressure sensor 73 via the first branch pipeline 76a. As described above, no flow velocity of the compressed gas occurs in the first branch pipeline 76a from the first branch point 74a to the differential pressure sensor 73, and thus the pressure at the first branch point 74a becomes a value on the low-pressure side of the differential pressure sensor 73. In addition, no flow velocity of the compressed gas occurs in the second branch pipeline 76b from the second branch point 74b to the differential pressure sensor 73, and thus the pressure at the second branch point 74b becomes a value on the high-pressure side of the differential pressure sensor 73.

Here, an influence of a pipeline resistance of the pipe 74 on a pressure measurement value will be described. The flow velocity of the compressed gas is not zero in the pipe 74, and thus the compressed gas receives a resistance from the pipe 74 when the compressed gas flows through the pipe 74. In the present embodiment, this resistance is referred to as a pipeline resistance. As the pipeline resistance increases, a pressure value of the compressed gas in the pipe 74 decreases. Therefore, when a length of the pipe 74 is too long, a pressure value of the compressed gas in the gap to be measured g and a pressure value of the compressed gas measured by the differential pressure sensor 73 deviate from each other. Therefore, the differential pressure sensor 73 cannot measure the pressure value in the gap to be measured g with high accuracy. Therefore, in the present embodiment, the differential pressure adjustment unit 70 is installed in the vicinity of the rotation shaft 21 (installed at the distance L 1), a pressure value input to the low-pressure side of the differential pressure sensor 73 becomes a pressure value at the first branch point 74a, and a pressure value input to the high-pressure side of the differential pressure sensor 73 becomes a pressure value at the second branch point 74b. The flow velocity of the compressed gas is zero in the first branch pipeline 76a extending from the first branch point 74a to the low-pressure side of the differential pressure sensor 73, and thus the pressure value at the first branch point 74a is directly input to the low-pressure side of the differential pressure sensor 73. The compressed gas receives the pipeline resistance in the pipe 74 from the rotation shaft 21 to the first branch point 74a, the differential pressure adjustment unit 70 is provided in the vicinity of the rotation shaft 21, and in the present embodiment, a pipeline length (distance L1) that receives the pipeline resistance is set to a distance that allows the pressure loss in the gap to be measured g to be input to the differential pressure sensor 73 with high accuracy. The pressure value to be input to the high-pressure side of the differential pressure sensor 73 is the pressure value at the second branch point 74b, and the flow velocity of the compressed gas is zero in the second branch pipeline 76b, and thus the pressure value of the compressed gas supplied from the compressed gas supply unit 80 is input to the high-pressure side of the differential pressure sensor 73 with high accuracy.

The bearing device 10 of the present embodiment is a device that converts a change in the gap g into a change in pressure loss due to the change and measures the change in the pressure loss as a differential pressure with respect to a supply pressure. That is, the bearing device 10 is a device for determining the change in the gap g based on the measured differential pressure.

The gap g serving as a reference for measurement is a gap g at the time of no-load and no rotation, and the differential pressure serving as a reference for measurement is a differential pressure at the time of no-load and no rotation.

A variation in the gap g includes three displacements. Specifically, the variation includes (a) a displacement of the shaft due to a load, (b) centrifugal expansion and contraction due to rotation, and (c) a thermal displacement. That is, the variation in the gap g is a sum of (a) + (b) + (c).

(a) depends on an external load variation, (b) depends on a rotation speed change, and (c) depends on a temperature change. In order to measure each displacement, it is preferred to set the other two items to constant values.

In order to generate the pressure loss in the gap g, it is necessary to sufficiently secure the flow of the pipe 74, but when the pipe 74 is made longer, the flow is hindered by the pipeline resistance, and the pressure loss due to the gap g decreases. When the pipe 74 is too long, the flow velocity in the pipe 74 finally becomes zero, and the differential pressure cannot be measured.

The pipeline (mainly L 1) in which a flow velocity occurs has a pipeline resistance, but if the resistance is too large, the flow is hindered, and thus the change in the pressure loss due to the change in the gap g becomes small, and finally, no differential pressure is generated (gas does not flow in the pipe 74). In the present embodiment, the distance L1 is determined so that the pipeline resistance generated at the distance L1 does not affect the measurement accuracy of the pressure.

As the change in the pressure loss due to the change in the gap g increases, a measurement accuracy of the change in the gap g increases. Therefore, it is preferred that the distance L1 is shorter. However, when the differential pressure adjustment unit 70 (throttle 72) is actually installed, a pipeline (mainly L1) may be required to some extent. A calibration value of the gap (calibration value of the differential pressure) changes when the pipe 74 changes, and thus it is preferred to fix the pipeline (L1).

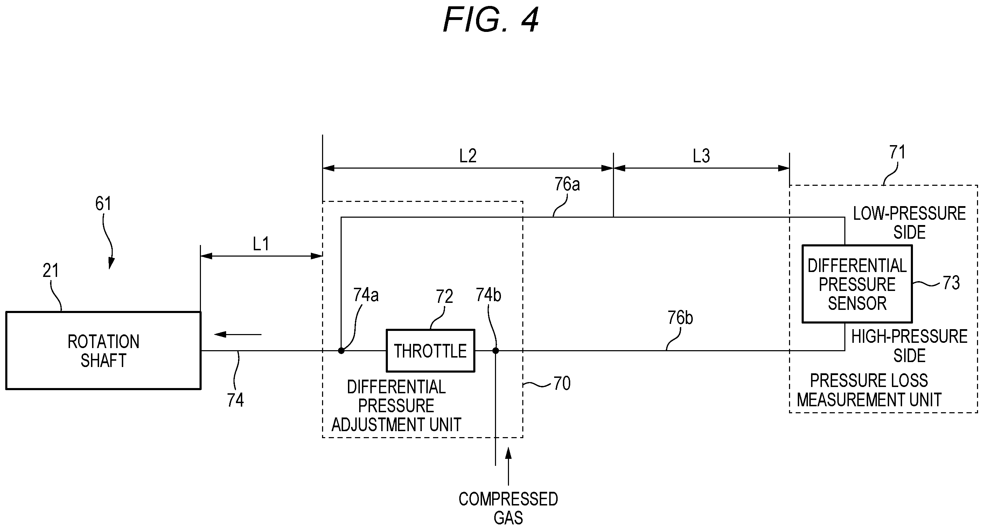

FIG. 4 illustrates a case in which a distance between the differential pressure adjustment unit 70 and the pressure loss measurement unit 71 is increased. Specifically, FIG. 4 illustrates a case in which the distance between the differential pressure adjustment unit 70 and the pressure loss measurement unit 71 is increased by an extension distance L3 as compared with FIG. 3. Depending on the type, application, and size of the machine tool and an installation position of a machine tool in a factory, an installation position of the pressure loss measurement unit 71 may be quite far from the rotation shaft 21 (for example, several tens of meters). In addition, when the rotation shaft 21 is a spindle, the spindle itself may move, and thus it is necessary to appropriately change a pipeline (path) between the rotation shaft 21 and the pressure loss measurement unit 71. Even when the pressure loss measurement unit 71 is installed at a location far from the rotation shaft 21 as illustrated in FIG. 4, only the first branch pipeline 76a and the second branch pipeline 76b are extended in the present embodiment. The flow velocity of the compressed gas in the first branch pipeline 76a and the second branch pipeline 76b is zero, and thus the pressure value input to the differential pressure sensor 73 is not affected by a length of the first branch pipeline 76a or a length of the second branch pipeline 76b. Therefore, the measurement accuracy of the differential pressure sensor 73 does not decrease due to the installation position of the pressure loss measurement unit 71 (relative position to the displacement detection unit 61). That is, the distance between the rotation shaft 21 and the pressure loss measurement unit 71 can be freely changed.

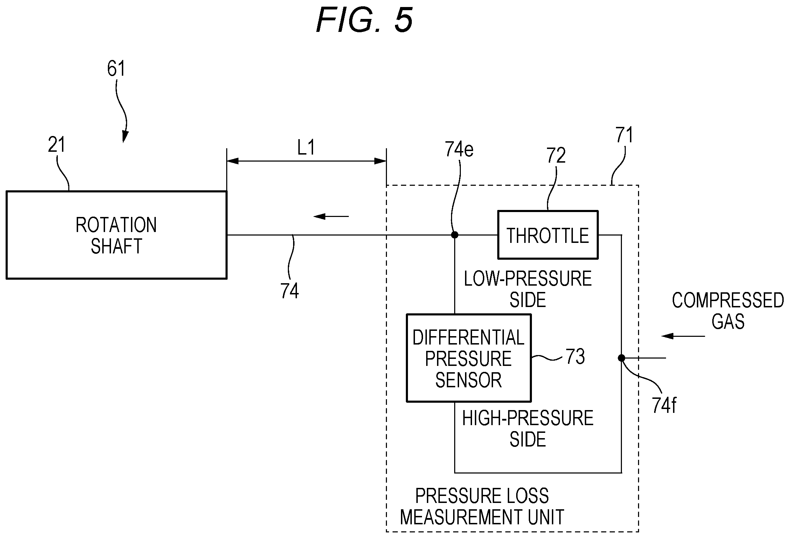

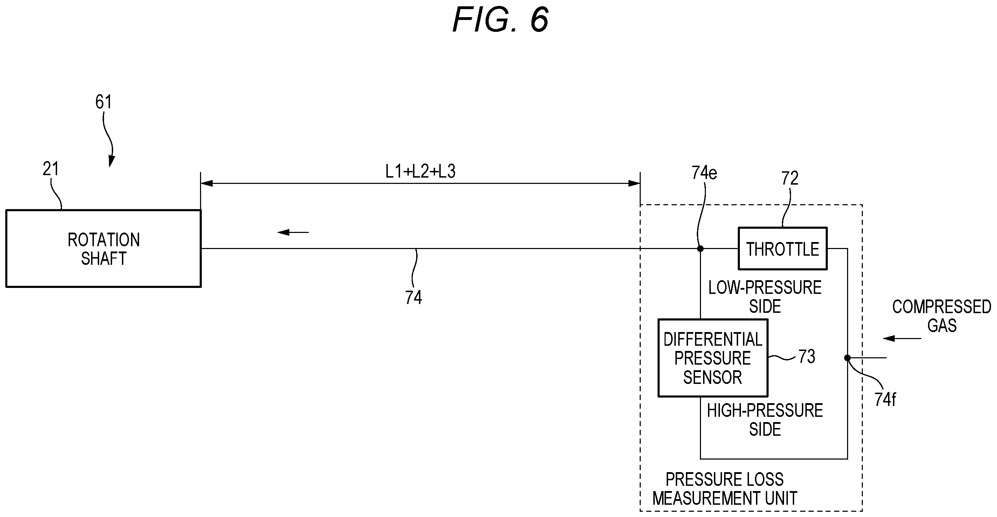

FIGS. 5 and 6 illustrate a comparative example illustrating an effect of the present embodiment. FIG. 5 corresponds to FIG. 3, and FIG. 6 corresponds to FIG. 4.

In the comparative example, the throttle 72 and the differential pressure sensor 73 are housed in the same housing (throttle 72 is provided inside the pressure loss measurement unit 71), and an arrangement position of the throttle 72 and an arrangement position of the differential pressure sensor 73 are substantially the same. Reference numeral 74e denotes a connection point at which the pipe on the downstream side of the throttle 72 is connected to a pipe on the low-pressure side of the differential pressure sensor 73. Reference numeral 74f denotes a connection point at which a pipe connecting the upstream side of the throttle 72 and the high-pressure side of the differential pressure sensor 73 is connected to a pipe from a compressed gas supply source (not illustrated).

In the case of the comparative example, when the distance from the rotation shaft 21 to the pressure loss measurement unit 71 is short (for example, when the rotation shaft 21 is separated from the pressure loss measurement unit 71 by the distance L1), the pipeline resistance of the pipe 74 hardly affects the pressure measurement value. That is, when the pipeline resistance is small as illustrated in FIG. 5, an accuracy of the pressure measurement value is almost the same between the comparative example and the embodiment of the present invention (FIG. 3). However, as illustrated in FIG. 6, when the distance from the rotation shaft 21 to the pressure loss measurement unit 71 becomes long (for example, L1 + L2 + L3), the pipeline length becomes large, and thus the pipeline resistance increases, and the accuracy of the pressure measurement value in the differential pressure sensor 73 decreases. In the case of FIG. 6, the flow velocity of the compressed gas occurs between the throttle 72 and the rotation shaft 21, and thus the distance over which the compressed gas receives a flow velocity resistance is long. As a result, a pressure measurement value on the low-pressure side of the differential pressure sensor 73 decreases. Depending on the installation position of the pressure loss measurement unit 71, it can be assumed that the pipeline resistance becomes excessive, the compressed gas to flow through the pipe 74 does not flow, and the differential pressure cannot be measured by the differential pressure sensor 73.

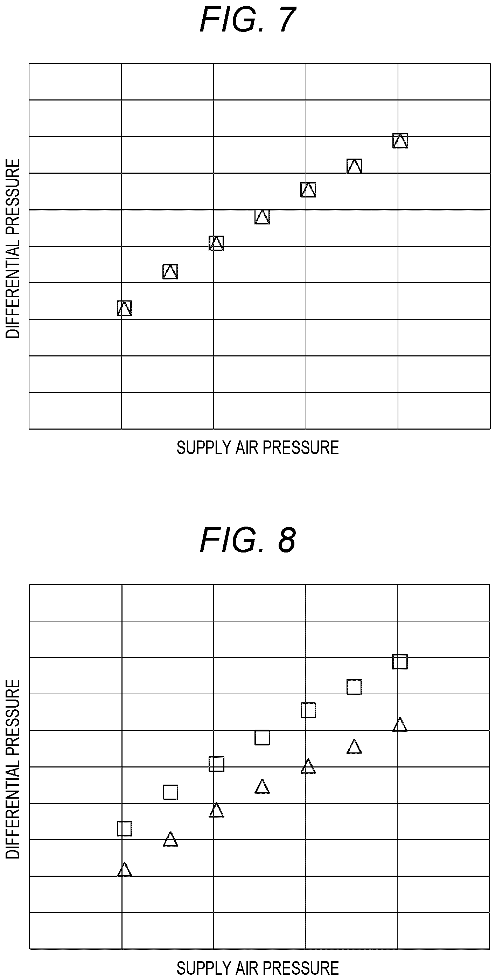

Next, experimental results regarding the effects of the configuration of the embodiment of the present invention (FIGS. 3 and 4) and the configuration of the comparative example (FIGS. 5 and 6) will be described with reference to FIGS. 7 and 8. In this experiment, the gap g was fixed and the pressure of the compressed gas to be supplied was varied to measure the differential pressure. Although the differential pressure may be measured by fixing the pressure of the compressed gas to be supplied and varying the gap g, the differential pressure was measured by fixing the gap g and varying the pressure of the compressed gas as long as the influence of the pipeline resistance due to the distance L3 can be grasped.

A graph of FIG. 7 illustrates experimental results when the configuration of the present embodiment is used, and a graph of FIG. 8 illustrates experimental results when the configuration of the comparative example is used. In the graphs of FIGS. 7 and 8, a horizontal axis represents the pressure of the compressed gas to be supplied by the compressed gas supply unit 80 (supply air pressure), and a vertical axis represents the differential pressure measured by the differential pressure sensor 73. In the graph of FIG. 7, □ indicates a differential pressure value when a distance from the rotation shaft 21 to the differential pressure sensor 73 is short (arrangement of FIG. 3), and △ indicates a differential pressure value when the distance from the rotation shaft 21 to the differential pressure sensor 73 is long (arrangement of FIG. 4). Similarly, in the graph of FIG. 8, □ indicates a pressure value when the distance from the rotation shaft 21 to the differential pressure sensor 73 is short (arrangement of FIG. 5), and △ indicates a pressure value when the distance from the rotation shaft 21 to the differential pressure sensor 73 is long (arrangement of FIG. 6).

As can be seen from FIG. 7, in the configuration of the present embodiment, □ and △ overlap. That is, even when the distance from the rotation shaft 21 to the differential pressure sensor 73 becomes long, a differential pressure measurement value by the differential pressure sensor 73 does not change. On the other hand, as can be seen from FIG. 8, in the configuration of the comparative example, □ and △ do not overlap (△ is below o). That is, when the distance from the rotation shaft 21 to the differential pressure sensor 73 becomes long, the differential pressure measurement value by the differential pressure sensor 73 changes from □ to △ due to the influence of the pipeline resistance. Therefore, in the configuration of the comparative example, when the distance from the rotation shaft 21 to the differential pressure sensor 73 becomes long, an accuracy of an output value of the differential pressure sensor 73 decreases. In this way, in the configuration of the comparative example (FIG. 6), the pipeline resistance increases due to the addition of the distance L3, and thus the flow of the compressed gas in the pipe 74 is hindered, and a pressure loss amount due to the gap g decreases. As a result, the differential pressure becomes smaller (accuracy of the output value of the differential pressure sensor 73 decreases). In the configuration of the present embodiment, the accuracy of the output value of the differential pressure sensor 73 does not decrease.

In the present embodiment, a position of the differential pressure adjustment unit 70 (throttle 72) viewed from the rotation shaft 21 is fixed in a range up to the distance L1. That is, an installation position of the throttle 72 (relative position to the displacement detection unit 61) is fixed within the range up to the distance L1. This is because the measurement accuracy of the pressure cannot be ensured when the differential pressure adjustment unit 70 (throttle 72) is installed at a position exceeding the distance L1. On the other hand, a position of the pressure loss measurement unit 71 viewed from the rotation shaft 21 is movable. This is because the position of the pressure loss measurement unit 71 does not affect the measurement accuracy of the pressure.

As described above, it can be understood from the test results that the pressure loss due to the gap g is less likely to be generated due to the pipeline resistance of the pipe 74. When the pressure loss due to the gap g is less likely to be generated, a differential pressure change due to the change in the gap g decreases, and thus a measurement accuracy of a change amount of the gap g decreases. In the present embodiment, such a decrease in the measurement accuracy is prevented or reduced.

As compared with the configuration of the comparative example, the configuration of the present embodiment has the following advantages. That is, as in the comparative example (FIG. 5), in a structure in which the throttle 72 is built in the pressure loss measurement unit 71 together with the differential pressure sensor 73 (provided in the same housing), when the pressure loss measurement unit 71 is attached to the rotation shaft 21, the pipeline resistance can be reduced, and the differential pressure sensor 73 provided in the pressure loss measurement unit 71 rotates together with the rotation shaft 21. When the differential pressure sensor 73 measures the differential pressure while rotating, a measurement error may occur or a failure of the differential pressure sensor 73 may occur. In contrast, in the configuration of the present embodiment, the differential pressure adjustment unit 70 (throttle 72) can be attached to the rotation shaft 21, and the differential pressure sensor 73 (pressure loss measurement unit 71) can be provided at a position away from the rotation shaft 21. The throttle 72 is a mechanical portion, and even when the throttle 72 rotates together with the rotation shaft 21, the throttle 72 is less likely to be affected by the rotation. In this way, according to the configuration of the present embodiment, only the differential pressure sensor 73 which is likely to be affected by the rotation can be installed away from the rotation shaft 21. As a result, a pipe having a required length can be used depending on the application of the machine tool or the like.

In the above first embodiment (FIG. 1), the case in which the compressed gas supply passages 64 and 65 extending in the axial direction are formed in the housing 11 has been described, the first embodiment is not limited to such a configuration, the gas passage 66b of the gas connection portion 66 may be extended and opened to an outer peripheral side, and the differential pressure adjustment unit 70 may be connected to the opening portion. Alternatively, the compressed gas supply passage 65 may be omitted, the compressed gas supply passage 64 may be opened to the outer peripheral surface of the small outer diameter portion 12a, and the differential pressure adjustment unit 70 may be connected to the opening portion.

In the above first embodiment (FIG. 1), the case has been described in which in the state in which the rotation shaft 21 of the bearing device 10 of the machine tool is rotated and the radial displacement of the rotation shaft 21 is "0", the throttle amount of the throttle 72 of the differential pressure adjustment unit 70 is adjusted such that the differential pressure detection value detected by the differential pressure sensor 73 becomes the preset value. However, the first embodiment is not limited to this adjustment. For example, in a state in which the rotation shaft 21 of the bearing device 10 is stopped without an external load (state of 0 rotation), the differential pressure of each pressure loss measurement unit 71 is adjusted to a certain value by the throttle 72 of the differential pressure adjustment unit 70, and this state is set as the displacement of 0. When a rotation speed of the rotation shaft 21 is changed, the differential pressure of each pressure loss measurement unit 71 changes according to the rotation speed of the rotation shaft 21, and thus the differential pressure set to the displacement of 0 is also offset by the same amount. After the rotation speed is stabilized, a trigger signal is given from the outside in the same no-load state as described above, and the value at that time is set to "0" again. Accordingly, as long as the rotation of the rotation shaft 21 is constant, measurements can be made even at different rotation speeds as in the first embodiment.

In FIG. 1, the differential pressure adjustment unit 70 is installed at a position away from the rotation shaft 21 by the distance L1, and as described above, the differential pressure adjustment unit 70 may be attached to the rotation shaft 21 and rotate together with the rotation shaft 21. That is, the distance L1 may be zero. In the present specification, "vicinity" includes a state of contact (including a case in which the distance L1 is a value larger than zero and a case in which the distance L1 is zero).

### Second Embodiment

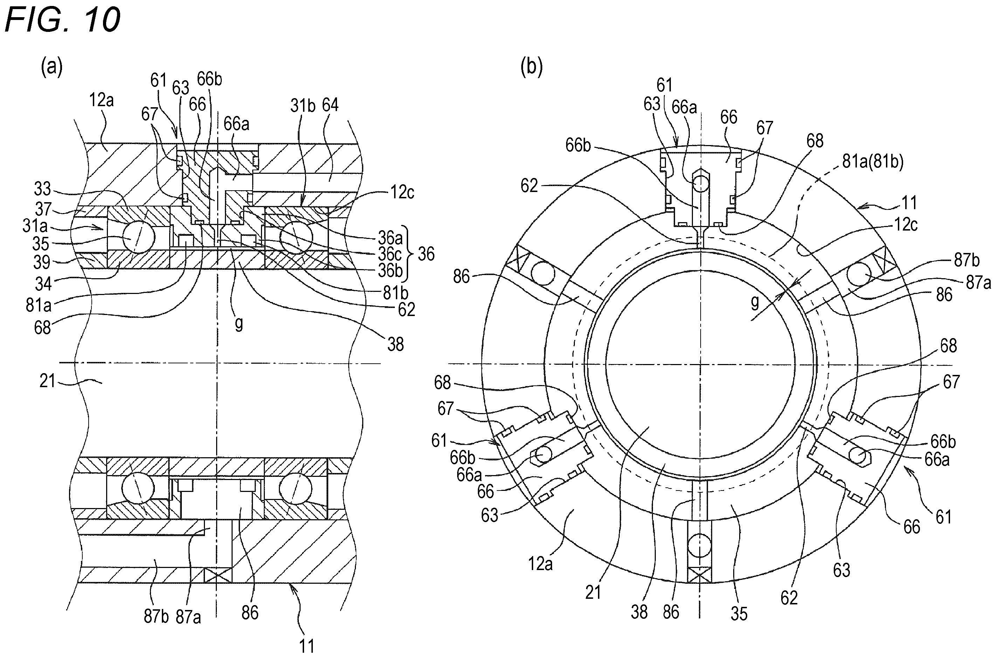

Next, a bearing device (spindle device) according to a second embodiment of the present invention will be described with reference to (a) and (b) of FIG. 10. The same configurations as those of the first embodiment (for example, the differential pressure adjustment unit 70, the pressure loss measurement unit 71, the compressed gas supply unit 80, and the pipe 74) are not illustrated and described, and differences from the first embodiment will be described.

The second embodiment applies a configuration for reducing the influence of the compressed gas on the front rolling bearing. More specifically, in the second embodiment, as illustrated in (a) of FIG. 10 and (b) of FIG. 10, three displacement detection units 61 are provided at equal intervals in the circumferential direction, and in each displacement detection unit 61, gas recovery grooves 81a and 81b for recovering the compressed gas are formed in the circumferential direction on a front side and a rear side sandwiching the compressed gas discharge nozzle 62 on an inner peripheral surface of the outer ring side spacer 36 facing the outer peripheral surface of the inner ring side spacer 38 via the gap to be measured g. As illustrated in a lower side in (a) of FIG. 10 and (b) of FIG. 10, a cavity portion 86 communicating with the gas recovery grooves 81a and 81b is formed at a position facing each displacement detection unit 61 of the outer ring side spacer 36 across a central axis. On the other hand, a gas discharge passage 87a communicating with the cavity portion 86 and extending in the radial direction is formed, and a gas discharge passage 87b having one end communicating with the gas discharge passage 87a and the other end opened to a front end is formed at a position facing the cavity portion 86 of the small outer diameter portion 12a. The gas recovery grooves 81a and 81b, the cavity portion 86, and the gas discharge passages 87a and 87b constitute a compressed gas discharge path (compressed gas discharge unit). The gas discharge passages 87a and 87b can be referred to as drain portions that discharge the compressed gas to the outside of the bearing device.

According to the second embodiment, the compressed air discharged from the compressed gas discharge nozzle 62 of the displacement detection unit 61 to the gap to be measured g between the inner peripheral surface of the outer ring side spacer 36 and the outer peripheral surface of the inner ring side spacer 38 spreads in a front-rear direction and the circumferential direction and flows through the gap to be measured g, and the compressed gas spreading in the front-rear direction flows into the gas recovery grooves 81a and 81b, flows through the gas recovery grooves 81a and 81b in the circumferential direction in (b) of FIG. 10 in a clockwise direction and a counterclockwise direction, reaches the cavity portion 86, and is discharged from the cavity portion 86 to the outside from a front end surface of the small outer diameter portion 12a through the gas discharge passages 87a and 87b of the small outer diameter portion 12a.

Therefore, the compressed gas injected from the compressed gas discharge nozzle 62 can be prevented from flowing between the outer ring 33 and the inner ring 34 of the angular ball bearings 31a and 31b disposed at front and rear positions of the outer ring side spacer 36 and the inner ring side spacer 38. Therefore, an influence of the compressed gas flowing into the angular ball bearings 31a and 31b, that is, an influence on the oil air lubrication or the oil mist lubrication of the angular ball bearings can be reduced or prevented.

In the present embodiment, the same effect as that of the first embodiment can also be obtained. That is, the pressure value to be input to the differential pressure sensor 73 is not affected by the distance from the rotation shaft 21 to the differential pressure sensor 73. As a result, the measurement accuracy of the differential pressure sensor 73 does not decrease depending on the installation position of the pressure loss measurement unit 71. Therefore, the distance between the rotation shaft 21 and the pressure loss measurement unit 71 can be freely changed.

### Third Embodiment

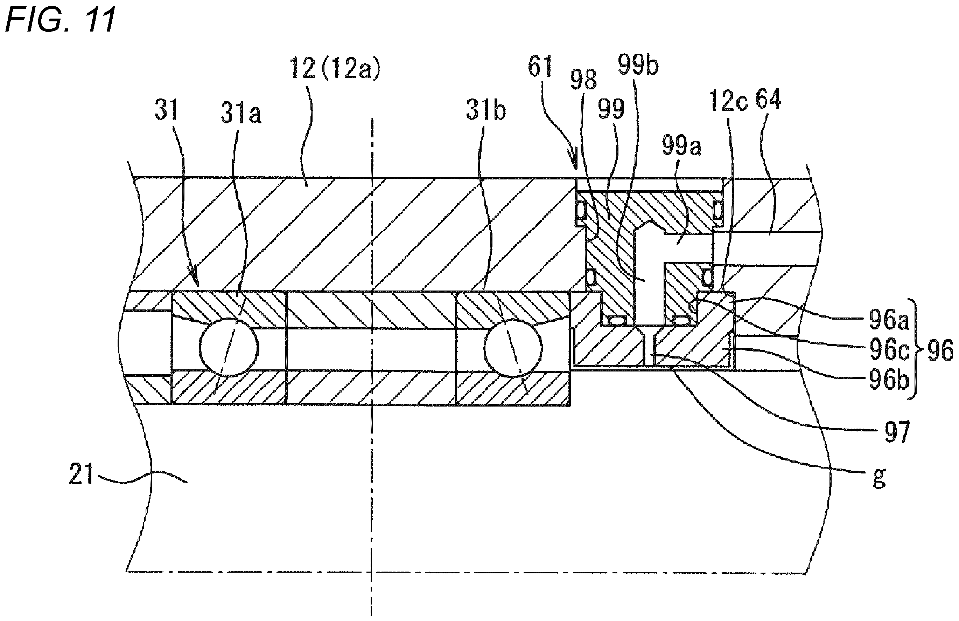

Next, a bearing device according to a fourth embodiment of the present invention will be described with reference to FIG. 11. The same configurations as those of the first embodiment (for example, the differential pressure adjustment unit 70, the pressure loss measurement unit 71, the compressed gas supply unit 80, and the pipe 74) are not illustrated and described, and differences from the first embodiment will be described.

In the third embodiment, the displacement detection unit 61 is formed at a position adjacent to the front rolling bearing 31 in the axial direction instead of a spacer between the front rolling bearings 31.

That is, in the third embodiment, as illustrated in FIG. 11, the displacement detection unit 61 is disposed adjacent to a rear side of the rear angular ball bearing 31b constituting the front rolling bearing 31.

Therefore, the bearing accommodating step portion 12c formed on an inner peripheral surface of the front cylindrical portion 12 of the housing 11 extends rearward from the angular ball bearing 31b constituting the front rolling bearing 31.

In the displacement detection unit 61, an outer ring side spacer 96 having the same shape as the outer ring side spacer 36 in the first embodiment and the second embodiment is disposed in an extension portion of the bearing accommodating step portion 12c, and an inner peripheral surface of the outer ring side spacer 96 faces an outer peripheral surface of the rotation shaft 21 so as to form a predetermined gap to be measured g.

Similar to the outer ring side spacer 36, the outer ring side spacer 96 includes an outer peripheral side ring portion 96a, an inner peripheral side ring portion 96b, a recess 96c, and a compressed gas discharge nozzle 97.

In addition, an opening portion 98 similar to the opening portion 63 is formed at a position facing the outer ring side spacer 96 of the small outer diameter portion 12a of the housing 11, and a gas connection portion 99 having gas passages 99a and 99b similar to those of the gas connection portion 66 is mounted in the opening portion 98.

Although not illustrated, the gas recovery groove for recovering the compressed gas and the gas discharge passage for discharging the compressed gas to the outside as described in the second embodiment are also provided in the third embodiment.

According to the third embodiment, the displacement detection unit 61 itself performs the same operation as that of the first embodiment, and thus the same operation and effect as those of the first embodiment can be exhibited. That is, the pressure value to be input to the differential pressure sensor 73 is not affected by the distance from the rotation shaft 21 to the differential pressure sensor 73. As a result, the measurement accuracy of the differential pressure sensor 73 does not decrease depending on the installation position of the pressure loss measurement unit 71. Therefore, the distance between the rotation shaft 21 and the pressure loss measurement unit 71 can be freely changed.

In addition, in the third embodiment, as in the first and second embodiments, the compressed gas is discharged from the outer ring side spacer 96 directly to the gap to be measured g formed between the outer ring side spacer 96 and the rotation shaft 21, not to the inner spacer. Therefore, as in the first embodiment and the second embodiment, there is no influence of misalignment between the rotation shaft 21 and the inner ring side spacer, which is a problem when the inner ring side spacer rotating integrally with the rotation shaft 21 is used, and it is possible to improve a shape accuracy of the gap to be measured g. The first embodiment to the third embodiment may be appropriately combined as long as there is no contradiction.

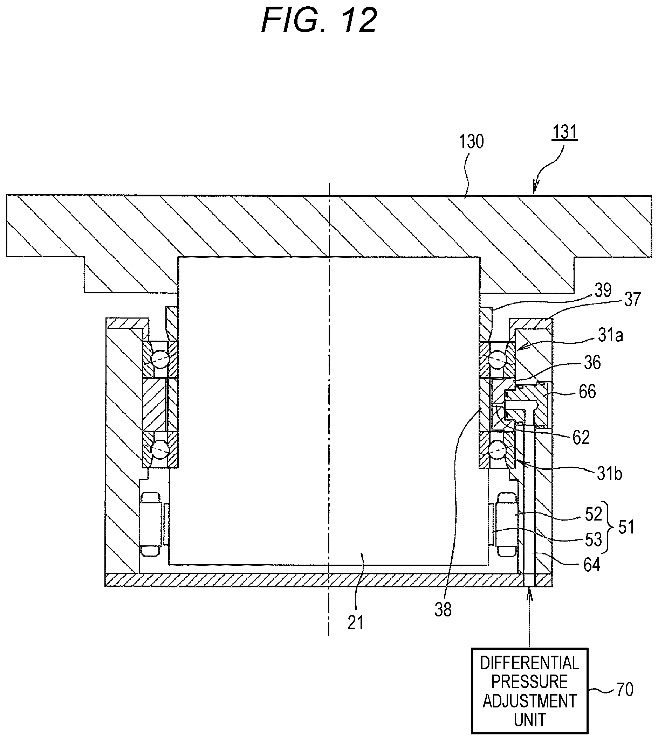

In the first embodiment to the third embodiment, the case in which the bearing device 10 according to the present invention is applied to the spindle device of the machine tool has been described, and the application of the present invention is not limited thereto. For example, the present invention can also be applied to a rotation table device 131 of the machine tool in which a rotation table 130 is disposed at an upper end of the rotation shaft 21 illustrated in FIG. 12. In FIG. 12, parts corresponding to those in FIG. 1 are denoted by the same reference numerals, and detailed description thereof will be omitted.

### Fourth Embodiment

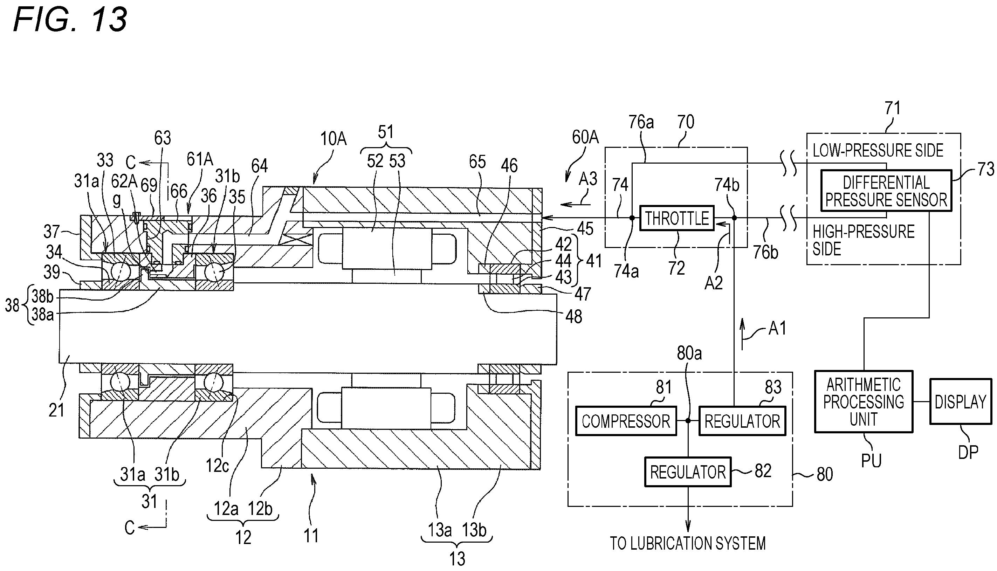

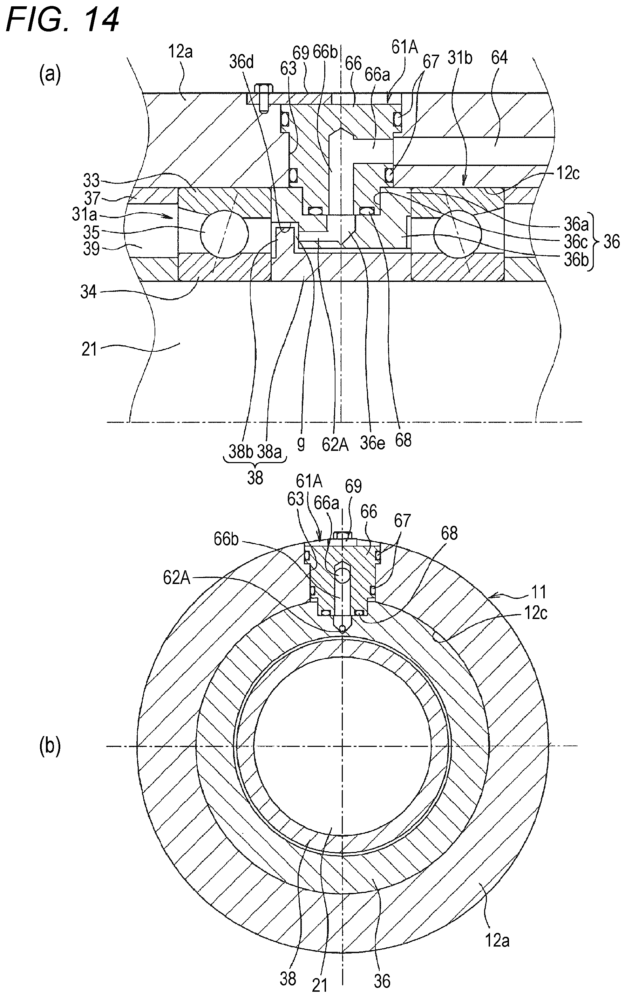

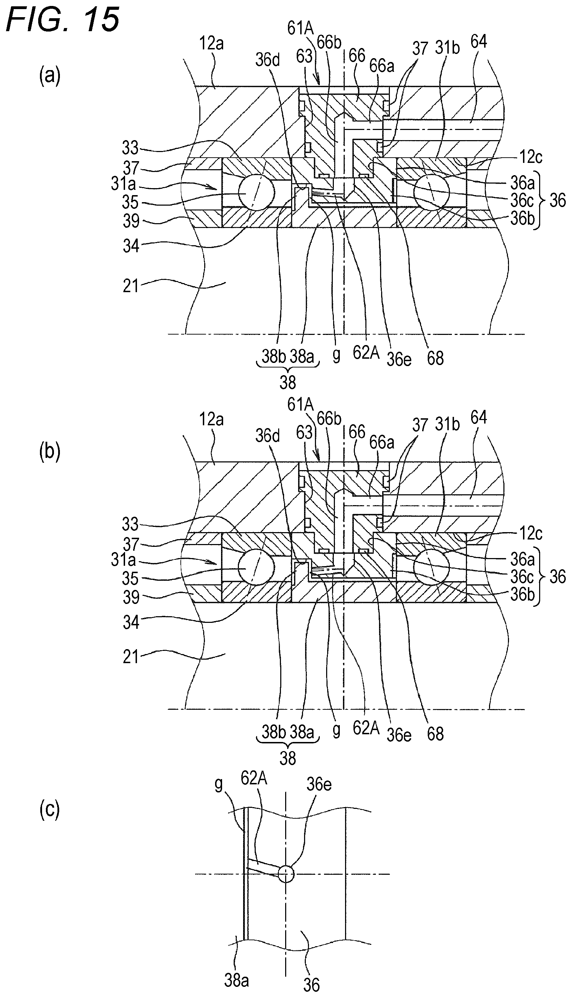

Next, a bearing device for a machine tool according to a fourth embodiment of the present invention will be described with reference to FIG. 13, (a) and (b) of FIG. 14, and (a) to (c) of FIG. 15. In the fourth embodiment, the axial displacement is measured. The same components or parts as those in the first embodiment are denoted by the same reference numerals.

A bearing device (spindle device) 10A of the machine tool is of a motor built-in type, and the hollow rotation shaft (spindle) 21 as a rotation member is rotatably supported by the front rolling bearing 31 and the rear rolling bearing 41 constituting the bearing device in the housing 11 as a fixing member (stationary member). The rotation shaft 21 is rotationally driven by the drive motor 51 disposed between the front rolling bearing 31 and the rear rolling bearing 41.

The housing 11 includes the front cylindrical portion 12 and the rear cylindrical portion 13 which are divided into two parts between the front rolling bearing 31 and the drive motor 51.

The front cylindrical portion 12 includes the front small outer diameter portion 12a having a small outer diameter and the rear large outer diameter portion 12b having an outer diameter larger than that of the small outer diameter portion 12a. The inner peripheral surfaces of the small outer diameter portion 12a and the large outer diameter portion 12b are formed to have the same inner diameter, and the bearing accommodating step portion 12c for accommodating the front rolling bearing 31 is formed from the front end side to the rear end side of the small outer diameter portion 12a.

The rear cylindrical portion 13 includes the large inner diameter portion 13a having a large inner diameter and the small inner diameter portion 13b having an inner diameter smaller than that of the large inner diameter portion 13a.

The front rolling bearing 31 includes the pair of angular ball bearings 31a and 31b having substantially the same dimensions and arranged so as to form a back-to-back combination. Each of the angular ball bearings 31a and 31b includes the outer ring 33 as a stationary side raceway ring, the inner ring 34 as a rotating side raceway ring, and the plurality of balls 35 as rolling elements arranged with a contact angle between the outer ring raceway groove as a stationary side raceway and the inner ring raceway groove as a rotating side raceway. That is, each of the bearings 31a and 31b includes the inner ring 34, the outer ring 33, and the balls (rolling elements) 35 rotatably arranged between the inner ring 34 and the outer ring 33. Each of the bearings 31a and 31b may include a cage that holds the rolling element.

In each of the angular ball bearings 31a and 31b, the outer ring 33 is fitted into the bearing accommodating step portion 12c formed in the front cylindrical portion 12 of the housing 11 via the outer ring side spacer 36, and is fixed by the front bearing outer ring retainer 37 bolted to the front cylindrical portion 12 of the housing 11.

The inner ring 34 of each of the angular ball bearings 31a and 31b is fitted onto the rotation shaft 21 via the inner ring side spacer 38, and is fixed to the rotation shaft 21 by the nut 39 fastened to the rotation shaft 21. A constant position pre-pressure is applied to the angular ball bearings 31a and 31b by the nut 39. Therefore, an axial position of the rotation shaft 21 is determined by the front rolling bearing 31.

The rear rolling bearing 41 is a cylindrical roller bearing, and includes the outer ring 42, the inner ring 43, and the plurality of cylindrical rollers 44 as rolling elements. The outer ring 42 of the rear rolling bearing 41 is fitted into the small inner diameter portion 13b of the rear cylindrical portion 13 of the housing 11, and is fixed to the small inner diameter portion 13b via the outer ring side spacer 46 by the rear bearing retainer 45 bolted to the small inner diameter portion 13b. The inner ring 43 of the rear rolling bearing 41 is fixed to the rotation shaft 21 via the inner ring side spacer 48 by another nut 47 fastened to the rotation shaft 21.

The drive motor 51 includes the stator 52 fitted into the large inner diameter portion 13a of the rear cylindrical portion 13 of the housing 11, and the rotor 53 fitted onto the rotation shaft 21 facing the inner peripheral side of the stator 52 via a gap therebetween.

The bearing device 10A of the machine tool having the above configuration is provided with a displacement measurement unit 60A that measures an axial load applied to the rotation shaft 21. The displacement measurement unit 60A includes, as one set, a displacement detection unit 61A that detects an axial displacement of the rotation shaft 21 using the compressed gas, the pressure loss measurement unit 71 that measures a pressure loss of the compressed gas corresponding to the gap between the outer ring side spacer 36 and the inner ring side spacer 38, and the differential pressure adjustment unit 70 that is connected to the compressed gas supply unit 80 and is provided between the displacement detection unit 61A and the pressure loss measurement unit 71. At least one set of the displacement detection unit 61A, the differential pressure adjustment unit 70, and the pressure loss measurement unit 71 is provided in the circumferential direction of the housing 11. The displacement measurement unit 60A includes the arithmetic processing unit PU that calculates the axial load applied to the rotation shaft 21 based on a measurement result of the pressure loss measurement unit 71. The compressed gas is supplied from one compressed gas supply unit 80 to each set of the displacement detection unit 61A, the differential pressure adjustment unit 70, and the pressure loss measurement unit 71.

As illustrated in (a) of FIG. 14 and (b) of FIG. 14, the displacement detection unit 61A is formed at least at one location in the circumferential direction of the small outer diameter portion 12a of the front cylindrical portion 12 of the housing 11. (b) of FIG. 14 is a cross-sectional view taken along line C-C in FIG. 13.

The displacement detection unit 61A includes the outer ring side spacer 36 and the inner ring side spacer 38 of the front rolling bearing 31. That is, the outer ring side spacer 36 includes the outer peripheral side ring portion 36a that comes into contact with the axial end surface of each of the outer rings 33 of the angular ball bearings 31a and 31b that face each other, and the inner peripheral side ring portion 36b that is narrower than the outer peripheral side ring portion 36a.

The recess 36c recessed from the outside to the inside is formed in the central portion of the outer peripheral side ring portion 36a in the axial direction. The inner peripheral side ring portion 36b is formed with a circumferential groove 36d facing between the outer ring 33 and the inner ring 34 of the angular ball bearing 31a.

The inner ring side spacer 38 includes a cylindrical portion 38a fitted to the rotation shaft 21, and an annular ridge 38b having a rectangular cross section, which protrudes to an outer peripheral side on a front end side of the cylindrical portion 38a and extends into the circumferential groove 36d of the outer ring side spacer 36.

As illustrated in (a) of FIG. 14, the gap to be measured g is formed on opposed surfaces in the axial direction of the left side surface of the outer ring side spacer 36 on which the circumferential groove 36d is formed and a right side surface of the annular ridge 38b of the inner ring side spacer 38.

In addition, an interval between a bottom surface of the circumferential groove 36d and an outer peripheral surface of the annular ridge 38b is also set to the same gap as the gap to be measured g, and similarly, an interval between the inner peripheral surface of the outer ring side spacer 36 and an outer peripheral surface of the cylindrical portion 38a of the inner ring side spacer 38 is also set to the same gap as the gap to be measured g. However, in the present embodiment, the gaps other than the gap to be measured g between the outer ring side spacer 36 and the inner ring side spacer 38 do not need to be matched with the gap to be measured g, and can be gaps larger than the gap to be measured g.

The outer ring side spacer 36 is formed with a gas passage 36e extending in the radial direction from the bottom surface to an inner peripheral surface side of the recess 36c, and a compressed gas discharge nozzle 62A opened to a right side surface of the circumferential groove 36d from a tip side of the gas passage 36e toward the gap to be measured g in the axial direction. The compressed gas is discharged from the compressed gas discharge nozzle 62A to the gap to be measured g between the circumferential groove 36d of the outer ring side spacer 36 and the annular ridge 38b of the inner ring side spacer 38.

The spindle of the machine tool may be rotated at a high speed in order to improve machining efficiency. Therefore, particularly, during the rotation of the spindle, a temperature difference occurs between the housing 11 and the rotation shaft 21, and in many cases, the rotation shaft 21 has a higher temperature than the housing 11, and thus a gap amount in the axial direction between the housing 11 and the rotation shaft 21 decreases by about several µm to several tens of µm. A center of the relative elongation in the axial direction due to the temperature difference varies depending on a fixing method of a bearing or the like, and thus a magnitude direction changes each time. In addition, due to the influence of the centrifugal force, the rotation shaft 21 may be relatively displaced by about several µm to several tens of µm in the axial direction with respect to the housing 11 due to the contraction of the rotation shaft 21 in the axial direction or a change in contact angle depending on a pre-pressure method of the bearings (31a and 31b).

In the spindle of the machine tool, the gap formed between the housing 11 and the rotation shaft 21, such as between the outer ring side spacer 36 and the inner ring side spacer 38, is set to about several tenths of a mm at most in order to prevent foreign matters from entering the inside of the spindle and the rolling bearing 31.

In the spindle of the machine tool, the gap (throttle) in the axial direction may be formed between the housing and a rotating body for the purpose of preventing foreign matters or the like from entering into the inside of the spindle or the bearing, and in this case, a size thereof is set to about several tenths of a mm at most.

Therefore, the gap to be measured g between the outer ring side spacer 36 and the inner ring side spacer 38 is set to 0.05 mm to 0.5 mm when the rotation shaft 21 is stationary, and a change amount in the pressure loss with respect to the axial displacement of the rotation shaft 21 increases as the gap amount decreases, and thus the gap to be measured g is preferably set to 0.05 mm to 0.2 mm.

In order to accurately measure the gap to be measured g between the outer ring side spacer 36 and the inner ring side spacer 38 during operation, it is desirable that the inner ring side spacer 38 provided in the displacement detection unit 61A is coaxial with the rotation shaft 21 as much as possible.

The small outer diameter portion 12a of the housing 11 is formed with the circular opening portion 63 whose inner diameter is reduced in two steps from the outer peripheral surface to the recess 36c of the outer ring side spacer 36 and that is coaxial with the gas passage 36e. As illustrated in FIG. 13, one end of the compressed gas supply passage 64 formed in the front cylindrical portion 12 is opened into the opening portion 63 on the rear side wall. The other end of the compressed gas supply passage 64 communicates with the compressed gas supply passage 65 that is opened at the rear end formed in the rear cylindrical portion 13 and extends forward in the axial direction.

As illustrated in (a) of FIG. 14 and (b) of FIG. 14, the gas connection portion 66 as a gas direction changing portion that changes a direction of the compressed gas to be supplied from the compressed gas supply passage 64 from the axial direction to the radial direction and supplies the compressed gas to the compressed gas discharge nozzle 62A via the gas passage 36e of the outer ring side spacer 36 is mounted in the opening portion 63.

The gas connection portion 66 has a shape capable of being fitted into the opening portion 63, for example, an outer peripheral shape having the same shape as the inner peripheral shape of the opening portion 63, and is formed therein with the gas passage 66a communicating with the opening portion 63 and the gas passage 66b having one end communicating with the gas passage 66a and the other end communicating with the compressed gas discharge nozzle 62A. The O-rings 67 are disposed between the side wall of the gas connection portion 66 and the inner wall of the opening portion 63, the O-rings 68 are also disposed between the bottom surface of the gas connection portion 66 and the bottom surface of the recess 36c, and the O-rings 67 and 68 prevent the leakage of the compressed air.

As illustrated in (a) of FIG. 14 and (b) of FIG. 14, the gas connection portion 66 is positioned in the radial direction such that the step portion of the outer peripheral surface thereof is in contact with the step portion of the inner peripheral surface of the opening portion 63. In addition, the end surface of the gas connection portion 66 on the outer side in the radial direction is in contact with the pressing piece 69 screwed to the outer peripheral surface of the small outer diameter portion 12a, thereby preventing the gas connection portion 66 from coming out of the opening portion 63. In addition, the gas connection portion 66 is not limited to the case of being prevented from coming out by the pressing piece 69, the flange portion can be formed on the outer peripheral surface side of the gas connection portion 66 and the flange portion can be screwed, and a fixing method of the gas connection portion 66 to the housing 11 can be any fixing method.

A compressed gas of, for example, about 4 atmospheres is supplied from the compressed gas supply unit 80 to the lubrication system (not illustrated) for oil air lubrication or oil mist lubrication that supplies lubricating oil to the front rolling bearing 31 and the rear rolling bearing 41. The compressed gas supply unit 80 includes the compressor 81 that discharges the compressed gas, the regulator 82 for the lubrication system that regulates the compressed gas to be discharged from the compressor 81, and the regulator 83 for pressure loss measurement connected in parallel with the regulator 82. The lubrication of the bearings 31 and 41 is not limited to the oil air lubrication or the oil mist lubrication. For example, the grease lubrication may be used.

The differential pressure adjustment unit 70 is connected to the compressed gas supply passage 65 of the housing 11 by the compressed gas supply path (pipe) 74. The differential pressure adjustment unit 70 includes the throttle 72 interposed in the compressed gas pipe 74, the first branch pipeline 76a branched from the first branch point 74a of the pipe 74, and the second branch pipeline 76b branched from the second branch point 74b of the pipe 74.

The first branch pipeline 76a is connected to the low-pressure side of the differential pressure sensor 73, and the second branch pipeline 76b is connected to the high-pressure side of the differential pressure sensor 73. The first branch point 74a is a branch point on the downstream side of the throttle 72, and the second branch point 74b is a branch point on the upstream side of the throttle 72.

The pressure loss measurement unit 71 is connected to the differential pressure adjustment unit 70 by the first branch pipeline 76a and the second branch pipeline 76b. The differential pressure sensor 73 provided in the pressure loss measurement unit 71 detects a difference (differential pressure) between the pressure on the upstream side and the pressure on the downstream side of the throttle 72.

The compressed gas supply path 74 extends downward from the second branch point 74b and is connected to the compressed gas supply unit 80.

In such a path arrangement, no flow velocity of the compressed gas occurs between the first branch point 74a and the low-pressure side of the differential pressure sensor 73 (that is, in the first branch pipeline 76a). In addition, no flow velocity of the compressed gas occurs between the second branch point 74b and the high-pressure side of the differential pressure sensor 73 (that is, in the second branch pipeline 76b).

The throttle 72 is interposed in the pipe 74 that couples the regulator 83 and the opening of the compressed gas supply passage 65 formed in the housing 11. A throttle amount of the throttle 72 is set so that a differential pressure detection value detected by the differential pressure sensor 73 becomes a preset value when the axial displacement of the rotation shaft 21 is "0" during the rotation of the rotation shaft 21. Accordingly, the pressure on the downstream side of the throttle 72 represents a pressure loss corresponding to only the axial displacement of the rotation shaft 21 in consideration of a flow path resistance due to a pipe length and a pipe diameter from the throttle 72 to the displacement detection unit 61A.

The low-pressure side of the differential pressure sensor 73 is connected to the pipe 74 on the downstream side of the throttle 72 by the first branch pipeline 76a (connected to the first branch point 74a), and the high-pressure side of the differential pressure sensor 73 is connected to the pipe 74 on the upstream side of the throttle 72 by the second branch pipeline 76b (connected to the second branch point 74b). In addition, the second branch point 74b, which is a merging point of the second branch pipeline 76b and the pipe 74, is connected to the regulator 83 by the pipe 74. The differential pressure sensor 73 detects a differential pressure between a compressed air pressure (pressure at the second branch point 74b) to be supplied from the regulator 83 and the pressure on the downstream side (pressure at the first branch point 74a) of the throttle 72 connected to the displacement detection unit 61A, that is, the pressure loss corresponding to the axial displacement of the rotation shaft 21 in the displacement detection unit 61A, and outputs the detected differential pressure detection value as an analog value or a digital value.

The arithmetic processing unit PU is implemented by an arithmetic processing device such as a microcomputer, and receives the differential pressure detection value output from the differential pressure sensor 73 of each pressure loss measurement unit 71. The differential pressure detection value is proportional to the axial load applied to the rotation shaft 21. Therefore, the bearing rigidity (spring constant) of the angular ball bearings 31a and 31b constituting the front rolling bearing 31 to which a constant position pre-pressure is applied is measured or calculated in advance, a relation between a magnitude of the axial load and the differential pressure detection value based on the displacement amount of the rotation shaft 21 is obtained to form the load calculation map, and the load calculation map is stored in the storage unit of the arithmetic processing unit PU, whereby a direction and the magnitude of the axial load applied to the rotation shaft 21 can be obtained with reference to the load calculation map based on the differential pressure detection value. The calculated direction and magnitude of the axial load are output to and displayed on the display DP.

The equation of the characteristic line of the load calculation map can be obtained instead of using the load calculation map, and an axial load amount can also be calculated by substituting the differential pressure detection value of the differential pressure sensor 73 into the obtained equation.

Next, an operation of the bearing device 10A of the fourth embodiment will be described.

First, the compressed gas is supplied from the compressed gas supply unit 80 to the differential pressure adjustment unit 70 and the pressure loss measurement unit 71, and as described above, in a state in which the rotation shaft 21 of the bearing device 10A of the machine tool is rotated and the axial load applied to the rotation shaft 21 is "0", the throttle amount of the throttle 72 of the differential pressure adjustment unit 70 is adjusted such that the differential pressure detection value detected by the differential pressure sensor 73 becomes the preset value.

Then, by starting the compressor 81 in a state in which the rotation shaft 21 of the bearing device 10A is stopped, the compressed gas is regulated by the regulator 82, and the compressed gas at a set pressure is supplied to the lubricating oil supply system (not illustrated) for the front rolling bearing 31 and the rear rolling bearing 41 to start the supply of the lubricant to the front rolling bearing 31 and the rear rolling bearing 41.

At the same time or before or after the supply, the compressed gas to be discharged from the compressor 81 is regulated by the regulator 83 and supplied to the differential pressure adjustment unit 70 and the pressure loss measurement unit 71.

The compressed gas supplied to the differential pressure adjustment unit 70 is input to the compressed gas supply passage 65 of the housing 11 via the throttle 72. The compressed gas input to the compressed gas supply passage 65 is redirected 90 degrees from the axial direction to the radial direction at the gas connection portion 66 from the compressed gas supply passage 64 coupled to the compressed gas supply passage 65 and is supplied to the compressed gas discharge nozzle 62A via the gas passage 36e.

The compressed gas supplied to the compressed gas discharge nozzle 62A is supplied to the gap to be measured g between a right side surface of the outer ring side spacer 36 on which the circumferential groove 36d is formed and the right side surface of the annular ridge 38b of the inner ring side spacer 38. At this time, as the gap to be measured g, that is, the axial displacement of the rotation shaft 21 becomes larger from the state of "0", the gap to be measured g becomes smaller, and the pressure loss decreases accordingly. Conversely, as the axial displacement decreases, the gap to be measured g becomes larger, and the pressure loss increases accordingly. As described above, the gap to be measured g becomes smaller due to the relative displacing of the rotation shaft 21 in the axial direction with respect to the housing 11 due to an influence of the centrifugal force or the temperature difference between the housing 11 and the rotation shaft 21 during the rotation of the spindle.

Therefore, in a no-load state in which the axial displacement of the rotation shaft 21 is "0", the differential pressure detection value detected by the differential pressure sensor 73 becomes the preset value, and the differential pressure detection value indicating that the axial displacement of the rotation shaft 21 is "0" is output to the arithmetic processing unit PU.

Therefore, the arithmetic processing unit PU calculates the axial load amount with reference to the load calculation map based on the differential pressure detection value input from the differential pressure sensor 73. The calculated load amount is output to and displayed on the display DP. In this case, the axial displacement is "0", and thus the axial load amount displayed on the display DP is "0".

From this state, for example, when drilling is started by attaching a drill to the rotation shaft 21, an axial load is applied to the rotation shaft 21, and an axial displacement corresponding to the axial load occurs in the rotation shaft 21.

Therefore, a pressure loss corresponding to the axial displacement of the rotation shaft 21 is generated in the compressed gas to be discharged from the compressed gas discharge nozzles 62A of the displacement detection unit 61A according to the axial displacement of the rotation shaft 21. This pressure loss is detected as the differential pressure detection value by the differential pressure sensor 73 of the pressure loss measurement unit 71.

When the detected differential pressure detection value is supplied to the arithmetic processing unit PU, the arithmetic processing unit PU calculates the axial load applied to the rotation shaft 21 with reference to the load calculation map. The calculated axial load is output to and displayed on the display DP.

In this way, according to the fourth embodiment, by supplying the compressed gas to the displacement detection unit 61A that detects the axial displacement and includes the outer ring side spacer 36 and the inner ring side spacer 38 of the front rolling bearing 31, the compressed gas is discharged from the compressed gas discharge nozzle 62A to the gap to be measured g between the circumferential groove 36d of the outer ring side spacer 36 and the annular ridge 38b of the inner ring side spacer 38. Therefore, the pressure loss of the compressed gas corresponding to the gap to be measured g, that is, the axial displacement of the rotation shaft 21 is generated. The pressure loss is detected by the differential pressure sensor 73 of the pressure loss measurement unit 71 provided outside the housing 11, and the detected differential pressure detection value is supplied to the arithmetic processing unit PU, whereby the axial load applied to the rotation shaft 21 can be calculated.

Therefore, in the displacement detection unit 61A, the pressure loss corresponding to the axial displacement of the rotation shaft 21 can be generated with a simple configuration in which only the circumferential groove 36d of the outer ring side spacer 36 and the annular ridge 38b of the inner ring side spacer 38 that face each other via the predetermined gap to be measured g, the gas passage 36e, the compressed gas supply passage 64, the gas connection portion 66, and the compressed gas discharge nozzle 62A are provided. Therefore, the displacement detection unit 61A does not require a component that operates electrically, and thus there is no need to consider routing of wiring or electrical insulation.

In addition, the differential pressure adjustment unit 70 supplies the compressed gas to the displacement detection unit 61A via the throttle 72, and a differential pressure between the pressure on the downstream side of the throttle 72, that is, on a displacement detection unit 61A side and an original pressure of the compressed gas to be supplied to the differential pressure adjustment unit 70 is detected, so that the pressure loss in the displacement detection unit 61A can be measured. Then, by inputting the detected differential pressure detection value to the arithmetic processing unit PU, the axial load applied to the rotation shaft 21 can be calculated with reference to the load calculation map.

Therefore, when the rotation shaft 21 is rotatably supported by the rolling bearing, it is possible to calculate the axial displacement of the rotation shaft 21 using the compressed gas or the axial load applied to the rotation shaft 21 with a simple configuration.

As described with reference to FIGS. 3 to 6 of the first embodiment, in the fourth embodiment, in order to reduce the influence of the distance from the rotation shaft 21 to the pressure loss measurement unit 71 (influence in the differential pressure measurement), the differential pressure adjustment unit 70 (throttle 72) and the pressure loss measurement unit 71 (differential pressure sensor 73) are separated, the differential pressure adjustment unit 70 is disposed between the rotation shaft 21 and the pressure loss measurement unit 71, the differential pressure adjustment unit 70 is provided within a predetermined distance from the rotation shaft 21, and the compressed gas is supplied to the differential pressure adjustment unit 70. The differential pressure adjustment unit 70 and the pressure loss measurement unit 71 are connected by the branch pipelines 76a and 76b.

Therefore, the compressed gas to be supplied from the compressed gas supply unit 80 flows through the pipe 74 toward the second branch point 74b as indicated by the arrow A1, flows leftward from the second branch point 74b (arrow A2), then passes through the throttle 72 and the first branch point 74a, and is supplied to the rotation shaft 21 as indicated by the arrow A3. Then, the compressed gas is supplied to the gap to be measured g, and if the rotation shaft 21 is rotating, a pressure change occurs (pressure decreases) in the gap to be measured g. The reduced pressure value is input to the low-pressure side of the differential pressure sensor 73 via the first branch pipeline 76a. As described above, no flow velocity of the compressed gas occurs in the first branch pipeline 76a from the first branch point 74a to the differential pressure sensor 73, and thus the pressure at the first branch point 74a becomes a value on the low-pressure side of the differential pressure sensor 73. In addition, no flow velocity of the compressed gas occurs in the second branch pipeline 76b from the second branch point 74b to the differential pressure sensor 73, and thus the pressure at the second branch point 74b becomes a value on the high-pressure side of the differential pressure sensor 73.

Similar to the first embodiment, in the present embodiment, the differential pressure adjustment unit 70 is installed in the vicinity of the rotation shaft 21 (installed at the distance L1), the pressure value to be input to the low-pressure side of the differential pressure sensor 73 becomes a pressure value at the first branch point 74a, and the pressure value to be input to the high-pressure side of the differential pressure sensor 73 becomes a pressure value at the second branch point 74b. The flow velocity of the compressed gas is zero in the first branch pipeline 76a extending from the first branch point 74a to the low-pressure side of the differential pressure sensor 73, and thus the pressure value at the first branch point 74a is directly input to the low-pressure side of the differential pressure sensor 73. The compressed gas receives the pipeline resistance in the pipe 74 from the rotation shaft 21 to the first branch point 74a, the differential pressure adjustment unit 70 is provided in the vicinity of the rotation shaft 21, and in the present embodiment, the pipeline length (distance L1) that receives the pipeline resistance is set to a distance that allows the pressure loss in the gap to be measured g to be input to the differential pressure sensor 73 with high accuracy. The pressure value to be input to the high-pressure side of the differential pressure sensor 73 is the pressure value at the second branch point 74b, and the flow velocity of the compressed gas is zero in the second branch pipeline 76b, and thus the pressure value of the compressed gas supplied from the compressed gas supply unit 80 is input to the high-pressure side of the differential pressure sensor 73 with high accuracy.

In the present embodiment, the case in which the distance between the differential pressure adjustment unit 70 and the pressure loss measurement unit 71 is increased is also the same as in FIG. 4 of the first embodiment. Therefore, even when the pressure loss measurement unit 71 is installed at a location far from the rotation shaft 21, the flow velocity of the compressed gas in the first branch pipeline 76a and the second branch pipeline 76b is zero, and thus the pressure value to be input to the differential pressure sensor 73 is not affected by the length of the first branch pipeline 76a or the length of the second branch pipeline 76b. Therefore, the measurement accuracy of the differential pressure sensor 73 does not decrease depending on the installation position of the pressure loss measurement unit 71.

In the fourth embodiment (FIG. 13), the case in which the compressed gas supply passages 64 and 65 extending in the axial direction are formed in the housing 11 has been described, the fourth embodiment is not limited to such a configuration, the gas passage 66b of the gas connection portion 66 may be extended and opened to an outer peripheral side, and the differential pressure adjustment unit 70 may be connected to the opening portion. Alternatively, the compressed gas supply passage 65 may be omitted, the compressed gas supply passage 64 may be opened to the outer peripheral surface of the small outer diameter portion 12a, and the differential pressure adjustment unit 70 may be connected to the opening portion.

In addition, in the fourth embodiment, the case in which the compressed gas discharge nozzle 62A extends in the axial direction has been described, the present invention is not limited thereto, and the compressed gas discharge nozzle 62A can be inclined upward as illustrated in (a) of FIG. 15, the compressed gas discharge nozzle 62A can be inclined downward as illustrated in (b) of FIG. 15, or the compressed gas discharge nozzle 62A can be turned around a central axis of the gas passage 36e as illustrated in (c) of FIG. 15.

In the fourth embodiment, the case has been described in which in the state in which the rotation shaft 21 of the bearing device 10A of the machine tool is rotated and the axial load applied to the rotation shaft 21 is "0", the throttle amount of the throttle 72 of the differential pressure adjustment unit 70 is adjusted such that the differential pressure detection value detected by the differential pressure sensor 73 becomes the preset value. However, the present embodiment is not limited to this adjustment. For example, in a state in which the rotation shaft 21 of the bearing device 10A is stopped without an external load (state of 0 rotation), the differential pressure of each pressure loss measurement unit 71 is adjusted to a certain value by the throttle 72 of the differential pressure adjustment unit 70, and this state is set as the displacement of 0. When the rotation speed of the rotation shaft 21 is changed, the differential pressure of each pressure loss measurement unit 71 changes according to the rotation speed of the rotation shaft 21, and thus the differential pressure set to the displacement of 0 is also offset by the same amount. After the rotation speed is stabilized, a trigger signal is given from the outside in the same no-load state as described above, and the value at that time is set to "0" again. Accordingly, as long as the rotation of the rotation shaft 21 is constant, measurements can be made even at different rotation speeds as in the fourth embodiment.

As described above, in the same manner as in the first embodiment, in the fourth embodiment, the pressure value to be input to the differential pressure sensor 73 is also not affected by the distance from the rotation shaft 21 to the differential pressure sensor 73. As a result, the measurement accuracy of the differential pressure sensor 73 does not decrease depending on the installation position of the pressure loss measurement unit 71. Therefore, the distance between the rotation shaft 21 and the pressure loss measurement unit 71 can be freely changed.

### Fifth Embodiment

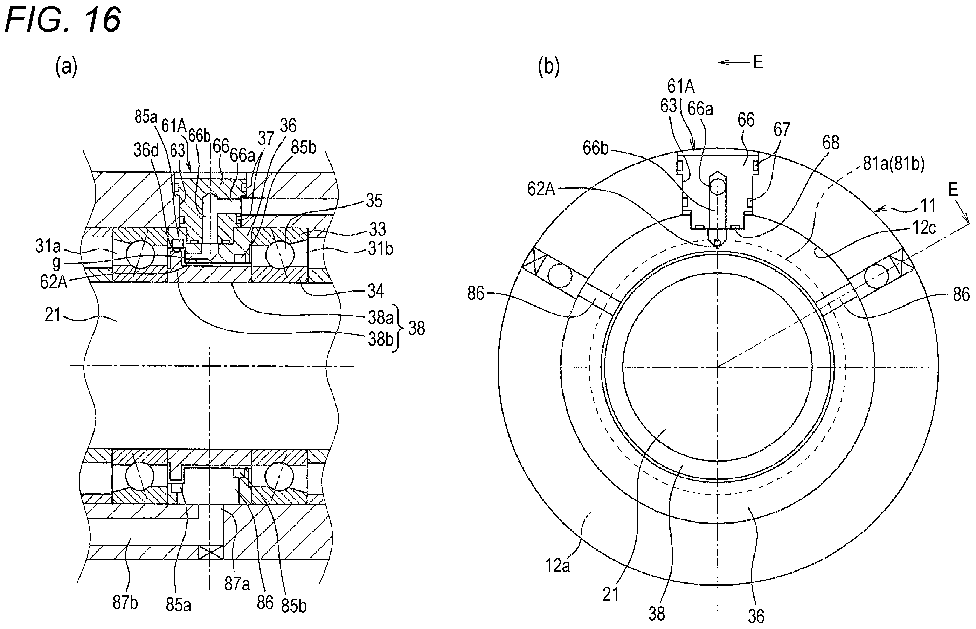

Next, a bearing device according to a fifth embodiment of the present invention will be described with reference to (a) and (b) of FIG. 16. (a) of FIG. 16 is a cross-sectional view taken along line E-E in (b) of FIG. 16. The fifth embodiment is also a bearing device that measures an axial displacement, and a basic structure is the same as that of the fourth embodiment.

In the fifth embodiment, a configuration is adopted in which an influence of the compressed gas on the front rolling bearing is reduced or removed. The same configurations as those of the fourth embodiment (for example, the differential pressure adjustment unit 70, the pressure loss measurement unit 71, the compressed gas supply unit 80, and the pipe 74) are not illustrated and described, and differences from the fourth embodiment will be described.

In the fifth embodiment, as illustrated in (a) of FIG. 16 and (b) of FIG. 16, a gas recovery groove 85a for recovering the compressed gas is formed in the circumferential direction on the bottom surface of the circumferential groove 36d of the outer ring side spacer 36. In addition, a gas recovery groove 85b for recovering the compressed gas is formed in the circumferential direction at an end portion on an angular ball bearing 31b side in the inner peripheral surface of the outer ring side spacer 36 facing the outer peripheral surface of the inner ring side spacer 38. As illustrated in a lower side in (a) of FIG. 16 and (b) of FIG. 16, the cavity portions 86 communicating with the gas recovery grooves 85a and 85b are formed at both sides of the outer ring side spacer 36 that sandwich the displacement detection unit 61A. In addition, the gas discharge passage 87a communicating with the cavity portion 86 and extending in the radial direction is formed, and the gas discharge passage 87b having one end communicating with the gas discharge passage 87a and the other end opened to the front end is formed at the position facing the cavity portion 86 of the small outer diameter portion 12a. The gas recovery grooves 85a and 85b, the cavity portion 86, and the gas discharge passages 87a and 87b constitute a compressed gas discharge path (compressed gas discharge unit). The gas discharge passages 87a and 87b can be referred to as drain portions that discharge the compressed gas to the outside of the bearing device.

According to the fifth embodiment, the compressed air discharged from the compressed gas discharge nozzle 62A of the displacement detection unit 61A to the gap to be measured g between the left side surface of the circumferential groove 36d of the outer ring side spacer 36 and the right side surface of the annular ridge 38b of the inner ring side spacer 38 spreads in the front-rear direction and the circumferential direction and flows through the gap to be measured g, and the compressed gas spreading in the front-rear direction flows into the gas recovery grooves 85a and 85b, flows through the gas recovery grooves 85a and 85b in the circumferential direction in (b) of FIG. 16 in a clockwise direction and a counterclockwise direction, reaches the cavity portion 86, and is discharged from the cavity portion 86 to the outside from the front end surface of the small outer diameter portion 12a through the gas discharge passages 87a and 87b of the small outer diameter portion 12a.

Therefore, the compressed gas injected from the compressed gas discharge nozzle 62A can be prevented from flowing between the outer ring 33 and the inner ring 34 of the angular ball bearings 31a and 31b disposed at the front and rear positions of the outer ring side spacer 36 and the inner ring side spacer 38. Therefore, an influence of the compressed gas flowing into the angular ball bearings 31a and 31b on the oil air lubrication or the oil mist lubrication of the angular ball bearings can be prevented.

In the fifth embodiment, the case in which the number of the displacement detection units 61A is one has been described, the fifth embodiment is not limited to this configuration, and two or more displacement detection units 61A may be installed. In addition, the cavity portion 86 formed in the outer ring side spacer 36 and the gas discharge passages 87a and 87b formed in the small outer diameter portion 12a may be provided in an intermediate portion between the adjacent displacement detection units 61A. In this case, by forming the cavity portion 86 in the intermediate portion between the adjacent displacement detection units 61A, it is possible to prevent the compressed gas discharged from one of the adjacent displacement detection units 61A from affecting the other displacement detection unit 61A. A plurality of cavity portions 86 may be provided between the adjacent displacement detection units 61A.

In the fifth embodiment, the pressure value to be input to the differential pressure sensor 73 is also not affected by the distance from the rotation shaft 21 to the differential pressure sensor 73. As a result, the measurement accuracy of the differential pressure sensor 73 does not decrease depending on the installation position of the pressure loss measurement unit 71. Therefore, the distance between the rotation shaft 21 and the pressure loss measurement unit 71 can be freely changed.

### Sixth Embodiment

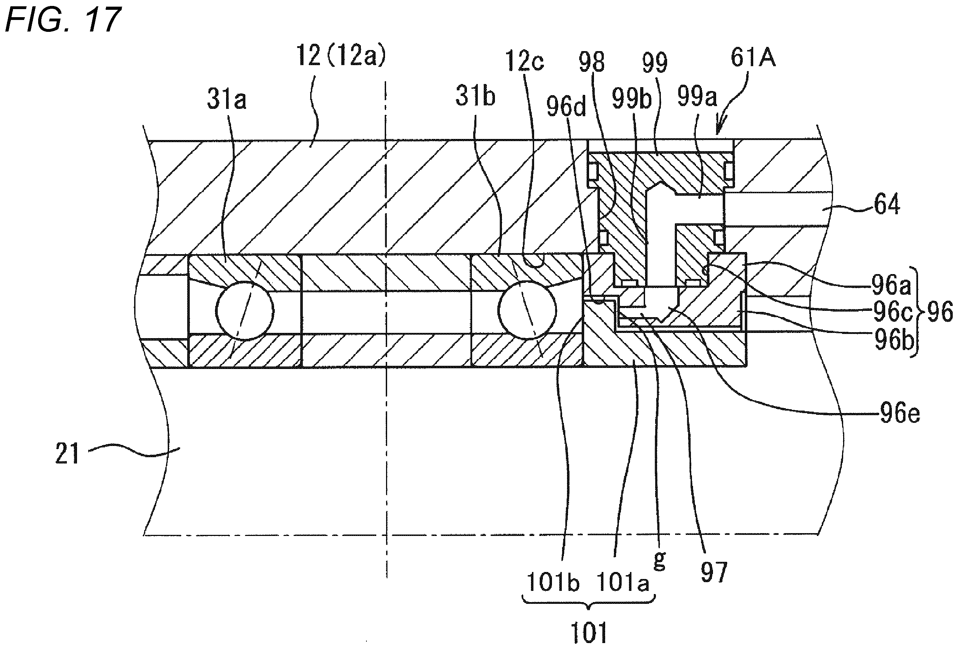

Next, a bearing device according to a sixth embodiment of the present invention will be described with reference to FIG. 17. The sixth embodiment is also a bearing device that measures an axial displacement, and a basic structure is the same as that of the fourth embodiment. The same configurations as those of the fourth embodiment (for example, the differential pressure adjustment unit 70, the pressure loss measurement unit 71, the compressed gas supply unit 80, and the pipe 74) are not illustrated and described, and differences from the fourth embodiment will be described.

In the sixth embodiment, an axial length of the gap to be measured g formed between the inner peripheral surface of the outer ring side spacer 36 and the outer peripheral surface of the inner ring side spacer 38 is set to a necessary minimum. More specifically, in the sixth embodiment, the displacement detection unit 61A is formed at a position adjacent to the front rolling bearing 31 in the axial direction instead of a spacer between the front rolling bearings 31.

That is, in the sixth embodiment, as illustrated in FIG. 17, the displacement detection unit 61A is disposed adjacent to the rear side of the rear angular ball bearing 31b constituting the front rolling bearing 31.

Therefore, the bearing accommodating step portion 12c formed on the inner peripheral surface of the front cylindrical portion 12 of the housing 11 extends rearward from the angular ball bearing 31b constituting the front rolling bearing 31.

In the displacement detection unit 61A, the outer ring side spacer 96 having the same shape as the outer ring side spacer 36 in the fourth embodiment and the fifth embodiment is disposed in the extension portion of the bearing accommodating step portion 12c, and the inner peripheral surface of the outer ring side spacer 96 faces an inner ring side spacer 101 provided on the outer peripheral surface of the rotation shaft 21.

Similar to the outer ring side spacer 36, the outer ring side spacer 96 includes the outer peripheral side ring portion 96a, the inner peripheral side ring portion 96b, the recess 96c, a circumferential groove 96d, a gas passage 96e, and the compressed gas discharge nozzle 97.

In addition, the opening portion 98 similar to the opening portion 63 is formed at a position facing the outer ring side spacer 96 of the small outer diameter portion 12a of the housing 11, and the gas connection portion 99 having the gas passages 99a and 99b similar to those of the gas connection portion 66 is mounted in the opening portion 98.

The inner ring side spacer 101 includes a cylindrical portion 101a and an annular ridge 101b protruding into the circumferential groove 96d of the outer ring side spacer 96. The gap to be measured g is formed between a right side surface of the annular ridge 101b and a left side surface of the outer ring side spacer 96 on which the circumferential groove 96d is formed and which faces the right side surface. The compressed gas is discharged to the gap to be measured g from the compressed gas discharge nozzle 97 formed in the outer ring side spacer 96.

According to the sixth embodiment, the displacement detection unit 61A itself performs the same operation as that of the fourth embodiment, and thus it is possible to calculate the axial load by exerting the same operation and effect as those of the fourth embodiment.

In the sixth embodiment, the pressure value to be input to the differential pressure sensor 73 is also not affected by the distance from the rotation shaft 21 to the differential pressure sensor 73. As a result, the measurement accuracy of the differential pressure sensor 73 does not decrease depending on the installation position of the pressure loss measurement unit 71. Therefore, the distance between the rotation shaft 21 and the pressure loss measurement unit 71 can be freely changed.

Although not illustrated, the gas recovery groove for recovering the compressed gas and the gas discharge passage for discharging the compressed gas to the outside as described in the fifth embodiment are also provided in the sixth embodiment. In addition, the fourth embodiment to the sixth embodiment may be appropriately combined as long as there is no contradiction.

In the fourth embodiment to the sixth embodiment described above, the case in which the bearing device 10A according to the present invention is applied to the spindle device of the machine tool has been described, and the application of the present invention is not limited thereto. For example, the present invention can also be applied to the rotation table device 131 of the machine tool in which the rotation table 130 is disposed at the upper end of the rotation shaft 21 illustrated in FIG. 12 or other machine tools.

Although specific embodiments have been described above, these embodiments are merely examples and are not intended to limit the scope of the present invention. The device and method described in the present specification can be embodied in forms other than those described above. The embodiments described above can be omitted, replaced, or modified without departing from the scope of the present invention. The omitted, replaced, and modified forms are included in the scope of the claims and equivalents thereof and belong to the technical scope of the present invention.

Although various embodiments have been described above, it is needless to say that the present invention is not limited to these examples. It is apparent to those skilled in the art that various changes or modifications can be conceived within the scope described in the claims, and it is understood that the changes or modifications naturally fall within the technical scope of the present invention. In addition, the components described in the above embodiments may be combined in any manner without departing from the spirit of the invention.

The present application is based on a Japanese patent application (No. 2022-176455) filed on November 2, 2022, contents of which are incorporated herein by reference.

### REFERENCE SIGNS LIST

10: bearing device (spindle device) of machine tool
11: housing
21: rotation shaft (rotation member)
31: front rolling bearing
31a, 31b: angular ball bearing
33: outer ring
34: inner ring
35: ball
36: outer ring side spacer
38: inner ring side spacer
41: rear rolling bearing
51: drive motor
52: stator
53: rotor
61: displacement detection unit
PU: arithmetic processing unit
62: compressed gas discharge nozzle
g: gap to be measured
64, 65: compressed gas supply passage
66: gas connection portion
70: differential pressure adjustment unit
71: pressure loss measurement unit
72: throttle
73: differential pressure sensor
74, 75: pipe
76a: first branch pipeline
76b: second branch pipeline
77: throttle
80: compressed gas supply unit
81: compressor
82, 83: regulator
81a, 81b: gas recovery groove
86: cavity portion
87a, 87b: gas discharge passage
96: outer ring side spacer
97: compressed gas discharge nozzle
99: gas connection portion
101: inner ring side spacer
130: rotation table
131: rotation table device of machine tool

## Claims

1. A bearing device that supports a rotation member on a fixing member via a rolling bearing, the bearing device comprising:
a displacement measurement unit configured to measure a radial displacement or an axial displacement of the rotation member by supplying a compressed gas to a gap to be measured between the rotation member and the fixing member around the rolling bearing, wherein
the displacement measurement unit includes
a displacement detection unit having a compressed gas discharge nozzle configured to discharge the compressed gas to the gap to be measured,
a pressure loss measurement unit configured to measure a pressure loss of the compressed gas to be supplied to the displacement detection unit, and
a throttle member provided in the vicinity of the rotation member and between the pressure loss measurement unit and the displacement detection unit, and
a supply source of the compressed gas is connected to a pipeline that connects a high-pressure side of the pressure loss measurement unit and the throttle member, and a low-pressure side of the pressure loss measurement unit is connected to a pipeline that connects the displacement detection unit and the throttle member

2. The bearing device according to claim 1, wherein
the pressure loss of the compressed gas is a differential pressure between a pressure of the compressed gas between the displacement detection unit and the throttle member and a pressure of a compressed gas to be output from the supply source of the compressed gas.

3. The bearing device according to claim 2, wherein
an installation position of the throttle member is fixed, and an installation position of the pressure loss measurement unit is movable.

4. The bearing device according to claim 3, wherein
a flow velocity of the compressed gas is zero from a location at which the supply source of the compressed gas is connected to the pipeline that connects the high-pressure side of the pressure loss measurement unit and the throttle member to the high-pressure side of the pressure loss measurement unit, and
a flow velocity of the compressed gas is zero from a location at which the low-pressure side of the pressure loss measurement unit is connected to the pipeline that connects the displacement detection unit and the throttle member to the low-pressure side of the pressure loss measurement unit.

5. The bearing device according to claim 4, wherein
the displacement detection unit further includes a gas recovery groove configured to recover the compressed gas discharged from the compressed gas discharge nozzle to the gap to be measured, on one side or both sides in an axial direction of the compressed gas discharge nozzle.

6. The bearing device according to claim 5, wherein
the displacement detection unit further includes a compressed gas discharge unit configured to discharge the compressed gas recovered by the gas recovery groove to the outside.

7. The bearing device according to claim 6, further comprising:
an arithmetic processing device configured to calculate a load amount to be applied to the rotation member based on the differential pressure detected by the pressure loss measurement unit.

8. A spindle device of a machine tool comprising: the bearing device according to any one of claims 1 to 7, the spindle device rotatably supporting a spindle as the rotation member by the bearing device and measuring a load applied to the spindle.
